# FASCICULE DE BREVET EUROPEEN

(11) **EP 4 162 652 B1**
(45) Date de publication et mention de la délivrance du brevet: **04.11.2026**
(21) Numéro de dépôt: 21737705.0
(22) Date de dépôt: 03.06.2021
(51) Int. Cl.: H04L 41/0631, H04L 41/0654, H04L 41/14, H04L 43/04, H04L 41/40

(54) **PROCÉDÉ DE DÉTECTION D'ANOMALIES DANS UN RÉSEAU DE COMMUNICATION, PROCÉDÉ DE COORDINATION DE DÉTECTION D'ANOMALIES, DISPOSITIFS, ÉQUIPEMENT ROUTEUR, SYSTÈME DE GESTION D'ANOMALIES ET PROGRAMMES D'ORDINATEUR CORRESPONDANTS**
VERFAHREN ZUR ANOMALIEDETEKTION IN EINEM KOMMUNIKATIONSNETZWERK, VERFAHREN ZUR KOORDINATION DER ANOMALIEDETEKTION UND ENTSPRECHENDE VORRICHTUNGEN, ROUTER, ANOMALIEVERWALTUNGSSYSTEM UND COMPUTERPROGRAMME
METHOD FOR DETECTING ANOMALIES IN A COMMUNICATION NETWORK, METHOD FOR COORDINATING ANOMALY DETECTION, AND CORRESPONDING DEVICES, ROUTER EQUIPMENT, ANOMALY-MANAGING SYSTEM AND COMPUTER PROGRAMS

(30) Priorité: 04.06.2020 FR 2005833
(43) Date de publication de la demande: 12.04.2023
(73) Titulaire: Orange, 92130 Issy-les-Moulineaux (FR)
(72) Inventeur: BEN SLIMEN, Yosra, 92326 CHÂTILLON CEDEX (FR); SEDJELMACI, Hichem, 92326 CHÂTILLON CEDEX (FR)
(74) Mandataire: Vidon Brevets & Stratégie
(86) Numéro de dépôt international: PCT/FR2021/051009
(87) Numéro de publication internationale: WO 2021/245361

(56) Documents cités:
- US-A1- 2019 058 715

## Description

### Domaine technique de l'invention

Le domaine de l'invention est celui de la gestion d'anomalies susceptibles d'apparaître dans un réseau de communication. Plus précisément, l'invention permet d'améliorer la sécurité et la résilience de ce réseau.

L'invention s'applique en particulier à la gestion des anomalies dans un réseau de communications mobiles dont l'architecture est conforme à la norme 3GPP (pour « Third Generation Partnership Project », en anglais), dans une de ses versions actuelles ou futures.

### Art antérieur

La 5^{ème} génération de la norme 3GPP spécifie une nouvelle architecture de réseau de communication mobiles, qui répond à un besoin de refonte créé par l'évolution de la technologie, l'émergence de nouveaux services et un nombre croissant d'internautes. Elle prend en compte de nouveaux paramètres tels que la nécessité d'une couverture mondiale combinée à une faible latence, ainsi qu'un niveau élevé de fiabilité et de sécurité. En outre, elle permet la mise en réseau d'objets, ce qu'on désigne par Internet des objets ou loT (pour « Internet of Things », en anglais), qui promet d'offrir de nouveaux services et facilités dans la vie quotidienne des gens.

Une innovation majeure introduite par la technologie 5G est l'évolutivité. En effet, l'architecture 5G tient compte de la nécessité éventuelle d'étendre les capacités du réseau, pour répondre à la croissance du trafic des utilisateurs et aux besoins des nouveaux services proposés par les fournisseurs. Pour ce faire, elle propose un découpage du réseau en tranches (pour « Network Slicing », en anglais), qui offre à la fois l'extensibilité et la flexibilité nécessaires à la gestion d'un réseau de dimension accrue. Selon la norme 5G du 3GPP, une tranche de réseau se compose de fonctions de réseau physiques et/ou virtuelles PNF/VNF (pour « Physical Network Functions/Virtual Network Functions », en anglais) qui sont interconnectées et peuvent appartenir à la partie accès et/ou à la partie cœur du réseau. On note que ces fonctions de réseau peuvent être gérées par des opérateurs distincts. La synthèse d'une tranche de réseau sert donc un objectif fonctionnel particulier et, une fois instanciée, elle est utilisée pour soutenir certains services de communication pour un client dit « vertical » dédié (ex. une entreprise, une offre de service, etc.) en lui assurant une garantie de qualité de service donnée. Chaque tranche de réseau peut avoir sa propre architecture, sa propre gestion des opérations FCAPS (pour « Fault-management, Configuration, Accounting, Performance, and Security », en anglais) et sa propre sécurité correspondant à un cas d'usage particulier.

Cette nouvelle architecture 5G est confrontée à un certain nombre de risques et de défis en matière de sécurité et de fiabilité, notamment en raison de la virtualisation et de l'automatisation d'un tel réseau. Pour atteindre les objectifs envisagés, ces risques doivent être anticipés, tant sur le plan conceptuel, en définissant clairement la fonctionnalité et la portée des caractéristiques de sécurité et de confidentialité de l'architecture, que sur le plan technique, en utilisant les solutions les plus appropriées dans la conception de l'architecture.

Etant donné le large éventail de secteurs/clients verticaux concernés, tels que par exemple la santé en ligne, les services d'urgence, les réseaux intelligents, il est essentiel d'isoler fortement les différentes tranches. En outre, ces tranches d'infrastructure 5G proposées par les opérateurs de télécommunications doivent offrir un niveau de disponibilité, de performance et de sécurité au moins égal à l'infrastructure qu'elles remplacent. En particulier, l'architecture doit garantir que les plans de contrôle et de données des tranches ne soient pas exposés à des attaques, et notamment à des attaques informatiques.

Outre les défis en matière de sécurité, la virtualisation des fonctions réseau (VNF) introduit des changements significatifs concernant la gestion des défaillances du réseau. De telles défaillances sont notamment des pannes ou des dysfonctionnements techniques qui se produisent dans le réseau, ou encore une dégradation de la qualité de service susceptible d'entraîner une violation des conditions SLA (pour « Service Level Agreement », en anglais). En effet, les fonctions de réseau virtuel peuvent être déployées à n'importe quel endroit de l'infrastructure grâce à des interconnexions dynamiques. Par conséquent, les dépendances sous-jacentes d'un service de réseau peuvent changer plusieurs fois au cours de son cycle de vie, ce qui rend les opérations FCAPS plus difficiles et l'analyse de la propagation des défaillances plus complexe.

La gestion des défaillances est encore rendue plus difficile par le fait que chaque tranche du réseau peut s'appuyer sur des sous-tranches de réseau qui peuvent être gérées par des opérateurs de réseau différents (par exemple, une sous-tranche peut regrouper des fonctions gérant l'accès, tandis qu'une autre sous-tranche peut regrouper des fonctions appartenant au cœur de réseau).

Il existe donc un besoin d'une solution de détection des attaques et des défaillances dans un réseau de communication qui prenne en compte ces nouvelles contraintes en termes d'architecture et de services pour garantir un niveau de sécurité et de résilience accru dans ce réseau.

L'invention vient améliorer la situation.

### Présentation de l'invention

L'invention répond à ce besoin en proposant un procédé de détection d'anomalies dans un réseau de télécommunications, susceptibles d'affecter un élément dit cible du réseau. Un tel procédé met en œuvre, au niveau d'un premier module de détection d'anomalies :
- l'obtention d'une pluralité de premières données de mesures représentatives d'une utilisation de ressources dudit réseau à un instant donné au niveau dudit élément cible ;
- la détermination à partir de la pluralité de premières données de mesures, d'au moins une catégorie d'anomalies parmi une pluralité de catégories d'anomalies comprenant au moins une catégorie représentative d'une présence d'attaque, une catégorie représentative d'une présence d'une défaillance et une catégorie représentative d'une absence d'anomalie;
- la demande de validation de la catégorie d'anomalies déterminée à un deuxième module de détection d'attaques et/ou à un troisième module de détection de défaillances, en fonction de la catégorie d'anomalies déterminée, ladite demande comprenant au moins l'instant donné, un identifiant de l'élément cible, la catégorie d'anomalies déterminée et la pluralité de premières données de mesures; et
- sur réception d'au moins une réponse de la part du deuxième et/ou troisième module, la décision en fonction de la réponse reçue d'une action de traitement à déclencher dans le réseau.

L'invention propose une approche tout-à-fait nouvelle et inventive pour la gestion de la sécurité et de la résilience d'un réseau de télécommunications, qui propose d'exploiter des données de mesures d'utilisation de ressources du réseau communes aux attaques et aux défaillances du réseau pour détecter plus généralement une anomalie survenue au niveau d'un élément cible du réseau et la traiter. Aucune limitation n'est attachée à la nature de l'élément cible. Un élément cible peut ainsi aussi bien désigner ici un équipement nœud du réseau qu'un ensemble d'équipements regroupés dans une même zone géographique, ou encore une tranche de réseau. Généralement, une technique de détection d'anomalies permet de détecter des observations qui dévient de celles observées de façon habituelle ou auxquelles on s'attend. C'est le cas par exemple dans la demande de brevet US 2019/0058715 A1. De telles anomalies peuvent être notamment relatives à des événements critiques du monde réel. Par exemple, une transaction effectuée de façon frauduleuse par carte bancaire est une anomalie car elle induit un prélèvement de charges non autorisées sur le compte bancaire associé. Selon l'invention, un comportement défaillant d'un élément cible est considéré comme une anomalie parce qu'il entraîne un écart par rapport à un comportement habituel de l'élément cible. Par exemple, une intrusion par Internet est aussi une anomalie, parce qu'elle emprunte un accès non autorisé et génère un trafic réseau anormal.

L'invention exploite avantageusement le fait que les attaques comme les défaillances peuvent présenter des caractéristiques communes, telles qu'une consommation d'énergie anormalement élevée ou une surcharge de l'équipement réseau qui fait l'objet de l'attaque ou qui connaît une défaillance. En outre, une attaque peut être mise en œuvre en provoquant des défaillances d'un équipement réseau. Selon l'invention, une anomalie détectée dans le réseau peut être aussi bien être relative à une attaque, une défaillance ou les deux en même temps.

Selon l'invention, une catégorie d'anomalies est déterminée sur la base de ces données de mesures communes, puis cette détermination est renforcée par des détections plus ciblées de défaillances et d'attaques confiées à deux modules dédiés respectivement à la détection des attaques et des défaillances. Chacun de ces deux modules spécifiques exploite des données de mesures d'utilisation de ressources du réseau qui lui sont propres, identifiées comme pertinentes pour détecter des attaques, respectivement des défaillances, puis valider la ou les catégories d'anomalies détectées par le module générique de détection d'anomalies.

De la sorte, l'invention permet de traiter les attaques et les défaillances séparément quand elles apparaissent distinctement mais également de tenir compte de leurs apparitions corrélées. Contrairement à l'art antérieur qui traite séparément la détection des attaques subies par un réseau de la gestion des défaillances qui surviennent au niveau des ressources de ce réseau, l'invention met en œuvre une solution commune et mutualisée, qui tire parti de la corrélation identifiée par les inventeurs entre les deux aspects de sécurité et de résilience pour renforcer la fiabilité de sa détection et l'efficacité de ses actions de traitement.

Selon un aspect de l'invention, le procédé met en œuvre :
au niveau du deuxième module de détection d'attaques :
   - l'obtention d'une pluralité de deuxièmes données de mesures caractéristiques d'une attaque et représentatives d'une utilisation de ressources dudit réseau audit instant donné au niveau dudit élément cible;
   - la détermination à partir de la pluralité de deuxièmes données de mesures, d'une catégorie d'attaques, parmi une pluralité de catégorie d'attaques comprenant au moins une catégorie représentative d'un type d'attaque et une catégorie représentative d'une absence d'attaque;
   - la réponse à la demande de validation du premier module, comprenant au moins la catégorie d'attaques déterminée par le deuxième module, dite catégorie d'attaques validée;
au niveau du troisième module de détection de défaillances :
   - l'obtention d'une pluralité de troisième données de mesures caractéristiques d'une défaillance réseau et représentatives d'une utilisation de ressources dudit réseau audit instant donné au niveau dudit élément cible;
   - la détermination à partir de la pluralité de troisièmes données de mesures, d'une catégorie de défaillances, parmi une pluralité de catégorie de défaillances comprenant au moins une catégorie représentative d'un type de défaillance et une catégorie représentative d'une absence de défaillance; et
   - la réponse à la demande de validation du premier module comprenant au moins la catégorie de défaillances déterminée par le troisième module, dite catégorie de défaillances validée.

Selon l'invention, les deuxième et troisième modules s'appuient sur des données de mesures spécifiques aux attaques/ défaillances, ce qui leur permet d'être plus rapidement fiables et matures (autrement dit, de converger plus rapidement). Ils peuvent ainsi corriger les erreurs de détection du module générique de détection d'anomalies.

Selon encore un autre aspect de l'invention, la détermination d'une catégorie d'anomalies comprend au moins une prédiction de ladite au moins une catégorie d'anomalies par un premier modèle de classification et le procédé met en œuvre, sur réception de la ou les réponses de validation du deuxième et/ou du troisième module, une mise à jour d'un premier ensemble d'apprentissage pour entraîner le premier modèle de classification utilisé par le premier module pour la prédiction de ladite au moins une catégorie d'anomalies, avec la pluralité de premières données de mesures associée à la catégorie d'attaques et/ou de défaillances validée reçue dans la ou les réponses de validation et un déclenchement d'une phase d'apprentissage du premier modèle de classification à l'aide du premier ensemble d'apprentissage mis à jour.

Avantageusement, la ou les catégories d'anomalies sont prédites à l'aide d'un premier modèle de classification préalablement entraîné avec un ensemble d'apprentissage initial qui est ensuite renforcé en y intégrant les sorties des modules de détection spécifiques. De la sorte, le premier modèle de classification du module de détection d'anomalies continue à apprendre après son déploiement et améliore ses performances au cours du temps.

Selon encore un autre aspect, ladite au moins une dite réponse de validation reçue comprend en outre une première récompense valorisée en fonction d'une correspondance de la catégorie d'attaques, respectivement de défaillances, validée avec la catégorie d'anomalies prédite par le premier module, ladite première récompense ayant une valeur positive en cas de correspondance, et une valeur négative en cas de non correspondance; et la phase d'apprentissage du premier modèle de classification est déclenchée à une échéance temporelle fonction de la valeur de la première récompense reçue.

L'objectif du premier module de détection d'anomalie est de maximiser sa valeur de récompense. Il va donc augmenter la fréquence des mises à jour sur réception d'une récompense négative et au contraire la diminuer en cas de récompense positive. De la sorte, il tend à devenir de plus en plus performant au cours du temps.

Selon encore un autre aspect de l'invention, suite à la validation de la catégorie d'anomalies déterminée par le premier module, un message d'information est transmis par le deuxième, respectivement le troisième module à un dispositif de détection d'anomalies voisin dans le réseau de communication, ledit message d'information comprenant au moins l'instant donné, l'identifiant de l'élément cible, la catégorie d'attaques, respectivement de défaillances validée et la pluralité de deuxièmes, respectivement troisièmes, données de mesures associées.

Un avantage est de renforcer la détection des dispositifs voisins en leur communiquant les informations relatives aux anomalies détectées par le dispositif local. Ils peuvent ainsi enrichir par exemple l'ensemble de données d'apprentissage de leur système de classification automatique lorsqu'ils utilisent un tel système.

En plus d'un mécanisme de validation interne, l'invention propose une diffusion des résultats de détection entre dispositifs de détection d'anomalies voisins. Toute détection d'anomalie validée au sein d'un dispositif de détection d'anomalies profite donc à ses voisins, ce qui permet d'améliorer les détections opérées par chacun d'entre eux, et ainsi plus globalement la sécurité du réseau.

Selon encore un autre aspect de l'invention, le procédé de détection d'anomalies met en œuvre une réception d'un message d'information en provenance d'un dispositif de détection d'anomalies voisin dans le réseau de communication, ledit message comprenant au moins un instant donné, un identifiant d'un élément cible, une pluralité de deuxièmes, respectivement troisièmes, données de mesures associées à l'instant donné et une classe d'attaques respectivement de défaillances détectée au niveau de l'élément cible, une mise à jour d'un deuxième, respectivement troisième, ensemble d'apprentissage utilisé pour entraîner un deuxième, respectivement troisième, modèle de classification utilisé par le deuxième, respectivement, troisième module de détection à l'aide des informations reçues et un déclenchement d'une phase d'apprentissage du deuxième, respectivement troisième, modèle de classification à l'aide du deuxième, respectivement troisième, ensemble d'apprentissage mis à jour.

Un avantage est que le dispositif de détection d'anomalies, en particulier ses modules de détection spécifiques apprend aussi de ses voisins.

Selon encore un autre aspect de l'invention, le procédé met en œuvre :
au niveau du deuxième, respectivement du troisième, module :
- la transmission à un dispositif de coordination de la détection d'anomalies du réseau d'une demande de validation externe comprenant au moins la catégorie d'attaques respectivement de défaillances détectée, la pluralité de deuxièmes, respectivement troisièmes, données de mesures associées, l'identifiant de l'élément cible et l'instant donné ; et
- la réception d'une réponse de validation externe comprenant au moins une catégorie d'attaques respectivement de défaillances validée par ledit dispositif de coordination de la détection d'anomalies.

Un avantage est de mettre en œuvre une validation externe, en plus de la validation interne, par un autre dispositif configuré pour détecter des anomalies dans le réseau, auquel il est connecté et qui a une vue plus globale du réseau et donc des performances de détection d'attaques/de défaillances plus élevées. Avantageusement, cet autre dispositif exécute des fonctions de coordination de plusieurs dispositifs de détection d'anomalies du réseau.

Selon encore un autre aspect de l'invention, la réponse de validation externe reçue comprend en outre une deuxième récompense ayant une valeur positive si la catégorie d'attaques, respectivement de défaillances détectée correspond à la catégorie d'attaques, respectivement de défaillances, détectée par le dispositif de coordination et une valeur négative sinon et le procédé comprend la mise à jour du deuxième, respectivement troisième, ensemble de données d'apprentissage par ajout de la pluralité de deuxièmes, respectivement troisièmes, données de mesures associées à la catégorie d'attaques, respectivement de défaillances validée par le dispositif de coordination.

Le mécanisme de récompense s'applique aussi entre le dispositif de coordination et chacun des dispositifs de détection d'anomalies qu'il supervise, ce qui leur permet de faire atteindre plus rapidement leur modèle de classification un stade de maturité.

L'invention concerne également un produit programme d'ordinateur comprenant des instructions de code de programme pour la mise en œuvre d'un procédé de détection d'anomalies selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de détection précité.

L'invention concerne aussi un dispositif de détection d'anomalies dans un réseau de télécommunications, comprenant un premier module de prédiction d'anomalies, un deuxième module de prédiction d'attaques et un troisième module de prédiction de défaillances.

Le premier module est configuré pour :
- obtenir une pluralité de premières données de mesures représentatives d'une utilisation de ressources dudit réseau à un instant donné au niveau dudit élément cible ;
- déterminer à partir de la pluralité de premières données de mesures, d'au moins une catégorie d'anomalies parmi une pluralité de catégories d'anomalies comprenant au moins une catégorie représentative d'une présence d'attaque, une catégorie représentative d'une présence d'une défaillance et une catégorie représentative d'une absence d'anomalie;
- demander une validation de la catégorie d'anomalies déterminée à un deuxième module de détection d'attaques et/ou à un troisième module de détection de défaillances, en fonction de la catégorie d'anomalies déterminée, ladite demande comprenant au moins l'instant donné, un identifiant de l'élément cible, la catégorie d'anomalies déterminée et la pluralité de premières données de mesures; et
- sur réception d'au moins une réponse de la part du deuxième et/ou troisième module, décider en fonction de la réponse reçue d'une action de traitement de l'anomalie à déclencher dans le réseau. Avantageusement, ledit dispositif est configuré pour mettre en œuvre le procédé de détection d'anomalies précité, selon ses différents modes de réalisation.

Avantageusement, ledit dispositif peut être intégré dans un équipement routeur du réseau de communication. Il est par exemple intégré dans une machine virtuelle hébergée par l'équipement routeur.

L'équipement routeur, le dispositif de détection d'anomalies et le programme d'ordinateur correspondants précités présentent au moins les mêmes avantages que ceux conférés par le procédé précité selon les différents modes de réalisation de la présente invention.

Corrélativement, l'invention concerne aussi un procédé de coordination de la détection d'anomalies dans un réseau de communication. Un tel procédé met en œuvre, au niveau d'un dispositif de coordination du réseau :
- la réception, en provenance d'au moins un dispositif de détection d'anomalies du réseau, d'une demande de validation externe comprenant au moins une catégorie d'attaques, respectivement de défaillances, détectée par ledit dispositif de détection), une pluralité de données de mesures caractéristiques d'une attaque, respectivement d'une défaillance et représentatives d'une utilisation de ressources du réseau à un instant donné au niveau d'un élément cible dudit réseau;
- la validation de ladite au moins une catégorie d'attaques, respectivement de défaillances, détectée par ledit dispositif de détection, dite catégorie d'attaques, respectivement de défaillances reçue, par mise en correspondance de la catégorie d'attaques, respectivement de défaillances reçue avec au moins une catégorie d'attaques, respectivement de défaillances, détectée par ledit dispositif de coordination audit instant donné et au niveau dudit élément cible ; et
- la transmission à destination du dispositif de détection d'anomalies d'une réponse de validation externe comprenant au moins la catégorie d'attaques respectivement de défaillances détectée par ledit dispositif de coordination.

L'invention propose ainsi de coordonner la détection d'anomalies dans un réseau de communications à l'aide d'un dispositif qui a une vue globale sur plusieurs dispositifs de détection et joue un rôle de renforcement de leur expérience. Il peut s'appuyer notamment sur des résultats de détection d'attaques et de défaillances stockées en mémoire, issus de son propre dispositif de détection s'il en possède un et des autres dispositifs de détection d'anomalies qu'il coordonne. Selon un aspect de l'invention, ladite réponse comprend en outre une récompense ayant une valeur positive si la catégorie d'attaques, respectivement de défaillances reçue, correspond à la catégorie d'attaques, respectivement de défaillances, détectée par le dispositif de coordination et une valeur négative sinon.

Un avantage est que le dispositif de détection d'anomalies peut exploiter cette valeur de récompense pour définir une mise à jour du modèle de classification d'attaque respectivement de défaillance qui a produit une prédiction erronée.

Avantageusement, ladite réponse comprend en outre un paramètre de configuration d'un modèle de classification utilisé par ledit dispositif de détection d'anomalies. Par exemple, le dispositif de détection d'anomalies met en œuvre un système d'apprentissage supervisé de type réseau de neurones profond et ce paramètre de configuration est un taux d'apprentissage (pour « learning rate », en anglais). En agissant sur ce taux d'apprentissage, le dispositif de coordination influe sur la capacité d'apprentissage du dispositif de détection.

Selon encore un autre aspect de l'invention, la réponse comprend en outre un type de données de mesures à ajouter à ladite pluralité de données de mesures collectées par le dispositif de détection d'anomalies.

De la sorte, le vecteur d'entrée est enrichi par une ou plusieurs données de mesures considérées par le dispositif de coordination comme plus discriminantes.

L'invention concerne également un produit programme d'ordinateur comprenant des instructions de code de programme pour la mise en œuvre d'un procédé de coordination de la détection d'anomalies selon l'invention, tel que décrit précédemment, lorsqu'il est exécuté par un processeur. L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de coordination précité.

L'invention concerne aussi un dispositif de coordination de la détection d'anomalies dans un réseau de communications. Un tel dispositif est configuré pour
- recevoir, en provenance d'au moins un dispositif de détection d'anomalies du réseau, une demande de validation externe comprenant au moins une catégorie d'attaques, respectivement de défaillances, détectée par ledit dispositif, une pluralité de données de mesures caractéristiques d'une attaque, respectivement d'une défaillance et représentatives d'une utilisation de ressources du réseau à un instant donné au niveau d'un élément cible dudit réseau;
- valider ladite au moins une catégorie d'attaques, respectivement de défaillances détectée par ledit dispositif de détection, dite catégorie d'attaques, respectivement de défaillances reçue, par mise en correspondance de la catégorie d'attaques, respectivement de défaillances reçue avec au moins une catégorie d'attaques, respectivement de défaillances, détectée par ledit dispositif de coordination audit instant donné et au niveau dudit élément cible ; et
- transmettre audit dispositif de détection d'anomalies une réponse de validation externe comprenant au moins la catégorie d'attaques respectivement de défaillances détectée par ledit dispositif de coordination.

Avantageusement, ledit dispositif est configuré pour mettre en œuvre le procédé de coordination de la détection d'anomalies précité, selon ses différents modes de réalisation.

Avantageusement, ledit dispositif peut être intégré dans un équipement routeur du réseau de communication.

L'équipement routeur, le dispositif de coordination de la détection d'anomalies, et le programme d'ordinateur correspondants précités présentent au moins les mêmes avantages que ceux conférés par le procédé précité selon les différents modes de réalisation de la présente invention. Corrélativement, l'invention concerne aussi un système de gestion d'anomalies dans un réseau de télécommunications. Un tel système comprend au moins un dispositif de détection d'anomalies selon l'invention et un dispositif de coordination de la détection d'anomalies selon l'invention.

Selon un aspect de l'invention, ledit réseau comprend au moins une tranche comprenant un dit dispositif de coordination, ladite tranche étant configurée pour soutenir un service de communication pour un client donné et comprenant au moins deux sous-tranches gérées par des entités administratives distinctes, chaque sous-tranche comprenant au moins un élément cible, et un dit dispositif de détection d'anomalies configuré pour détecter des anomalies au niveau dudit au moins un élément cible de ladite sous-tranche.

Contrairement à l'état de la technique qui s'attache à détecter ou à prévoir les services défectueux au niveau d'une sous-tranche d'un réseau, l'invention propose de coordonner au niveau d'une tranche d'un réseau les actions des dispositifs de détection d'anomalies des différentes sous-tranches, pour prendre en compte le fait que les sous-tranches, bien que gérées par des opérateurs différents, ne sont pas indépendantes en réalité. Un avantage est d'obtenir une vue générale de la tranche, tout en gardant une granularité fine et donc une bonne précision.

L'invention propose ainsi une solution de gestion d'anomalies de bout en bout, qui est bien adaptée à une architecture en tranches comme celle proposée par la future norme 5G du 3GPP. Avantageusement, l'invention est aussi bien adaptée à un réseau de communication présentant une architecture hiérarchique comme celle proposée par les normes existantes 2G ; 3G et 4G du 3GPP. Par exemple, un réseau conforme à l'une de ces normes distingue un premier niveau hiérarchique, dit de technologies, correspondant par exemple à des micro-cellules d'un réseau cellulaire, chaque technologie comprenant un ou plusieurs dispositifs de détection d'anomalies. Il comprend aussi un deuxième niveau hiérarchique, dit de régions, supérieur au premier, dont les régions correspondent par exemple à des macro-cellules d'un réseau cellulaire. Chaque région englobe plusieurs technologies ou micro cellules et comprend un dispositif de détection configuré pour valider les détections d'anomalies faites par les dispositifs de détection d'anomalies de chacune des micro cellules, qui lui sont rattachées. Quant au troisième niveau hiérarchique, dit général, il comprend un dispositif de coordination, par exemple intégré dans un équipement nœud centralisé, qui reçoit les demandes de validation émises par les dispositifs de détection d'anomalies de chacune des régions.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] : présente de façon schématique un exemple d'équipement nœud d'un réseau de communication, qui subit une attaque ou une défaillance ;
[Fig 2A] : présente de façon schématique un exemple de structure fonctionnelle d'un dispositif de détection d'anomalies selon un mode de réalisation de l'invention ;
[Fig 2B] : présente de façon schématique un exemple de structure fonctionnelle des modules de détection d'anomalies, respectivement d'attaques et de défaillances du dispositif de détection d'anomalies selon un mode de réalisation de l'invention ;
**[****Fig 3****]** : présente sous forme de logigramme les étapes d'un procédé de détection d'une anomalie dans un réseau de communication selon un mode de réalisation de l'invention ;
**[****Fig 4****]** : décrit sous forme d'un logigramme les étapes d'un procédé de détection d'anomalies dans un réseau de communication selon un mode de réalisation de l'invention ;
**[****Fig 5****]** : présente de façon schématique un exemple de structure fonctionnelle d'un dispositif de coordination de la détection d'anomalies selon un mode de réalisation de l'invention ;
**[****Fig 6****]** : décrit sous forme de logigramme les étapes d'un procédé de coordination d'une détection d'anomalies dans un réseau de communication selon un autre mode de réalisation de l'invention ;
**[****Fig 7****]** : illustre de façon schématique la structure fonctionnelle d'un système de gestion des anomalies dans un réseau de communication, lorsqu'il est organisé selon une architecture en tranches, selon un premier exemple de réalisation de l'invention ;
**[****Fig 8****]** : illustre de façon schématique la structure fonctionnelle d'un système de gestion des anomalies dans un réseau de communication, lorsqu'il est organisé selon une architecture hiérarchique, selon un deuxième exemple de réalisation de l'invention ;
**[****Fig 9****]** : illustre de façon schématique la structure matérielle d'un dispositif de détection d'anomalies selon un exemple de réalisation de l'invention ; et
**[****Fig 10****]** : illustre de façon schématique la structure matérielle d'un dispositif de coordination de la détection d'anomalies dans un réseau de communication selon un autre exemple de réalisation de l'invention.

### Description détaillée de l'invention

Le principe général de l'invention repose sur la détection d'anomalies dans un réseau de communication par un module de détection générique qui détermine au moins une catégorie d'anomalies à partir d'une pluralité de premières données de mesures représentatives d'une utilisation de ressources physiques de ce réseau de communication. La ou les catégories d'anomalies en question peuvent être une catégorie d'attaques et/ou une catégorie de défaillances. Aucune limitation n'est attachée à la nature des attaques et des défaillances pouvant être considérées par l'invention.

La catégorie d'anomalies ainsi déterminée est ensuite soumise à validation auprès d'un module spécifique de détection d'attaques et/ou un module spécifique de détection de défaillances, selon qu'il s'agit d'une catégorie d'attaques ou d'une catégorie de défaillances. On note que la détection d'anomalies selon l'invention peut concerner des éléments cibles de diverses natures, comme par exemple un équipement du réseau (par exemple un équipement physique tel qu'un routeur ou une fonction virtuelle), un ensemble d'équipements physiques et/ou virtuels, un service, une zone géographique dans laquelle se trouvent plusieurs nœuds du réseau, etc.

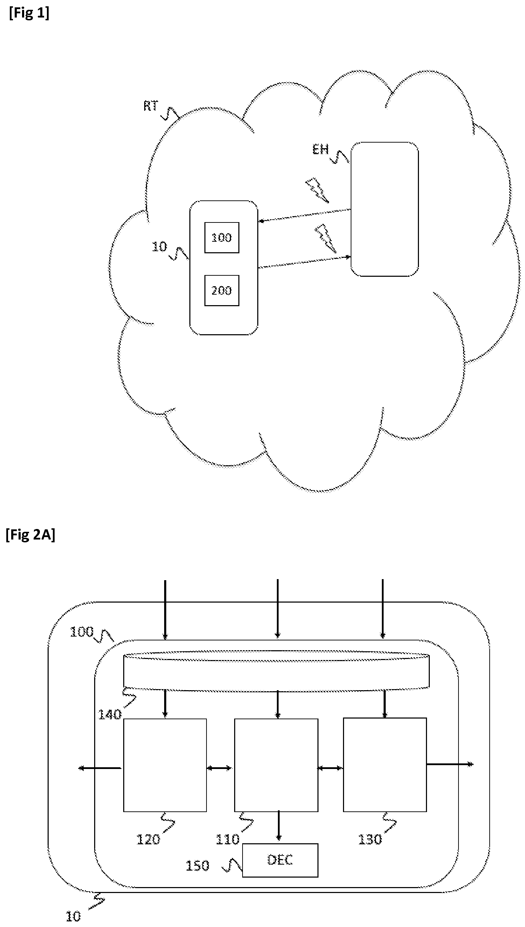

On présente ici, en relation avec la **figure 1****,** un réseau de communication RT comprenant un équipement nœud EH, par exemple un équipement routeur, un commutateur (pour « switch », en anglais) ou un équipement de contrôle d'accès, qui subit une défaillance réseau et/ou une attaque (élément cible au sens de l'invention). Cet exemple est considéré à titre illustratif et n'est pas limitatif en soi de l'invention, d'autres contextes d'application de l'invention pouvant être envisagés. La défaillance et/ou l'attaque subie par l'équipement nœud EH est détectée à partir de données de mesures relevées par une ou plusieurs sondes (non représentées), ces sondes pouvant être embarquées dans l'équipement nœud EH et/ou dans d'autres équipements du réseau communiquant avec ce dernier ou plus généralement être placées en tout point du réseau. Les données de mesures collectées peuvent aussi être agrégées puis stockées dans des journaux d'événements, appelés aussi journaux de logs. Plus généralement, ces données de mesures, relatives à une utilisation des ressources réseau par l'équipement nœud EH, sont obtenues d'une ou plusieurs sources distinctes et sont ensuite traitées par un dispositif de détection d'anomalies 100 intégré dans un équipement nœud 10 du réseau de communication RT. Plus généralement, l'équipement EH est un équipement hôte relié au réseau de communication RC et qui fournit des services à d'autres équipements ou systèmes. Dans un réseau virtualisé, un tel équipement hôte héberge un système virtuel, aussi appelé machine virtuelle, qui utilise ses ressources physiques pour rendre de tels services.

Le dispositif 100 est configuré pour détecter une ou plusieurs anomalies, déterminer s'il s'agit d'une attaque et ou d'une défaillance réseau et décider d'une action de traitement appropriée à déclencher auprès d'un dispositif actionneur 200, qui dans cet exemple est intégré à l'équipement nœud 10. Bien sûr, l'invention n'est pas limitée à cet exemple et le dispositif 100 peut aussi être intégré à une machine virtuelle hébergée par l'équipement 10.

En relation avec la **figure 2A****,** le dispositif de détection d'anomalies 100 selon l'invention comprend trois modules principaux, connectés entre eux :
- un premier module 110 de détection d'anomalies ;
- un deuxième module 120 de détection d'attaques ; et
- un troisième module 130 de détection de défaillances.

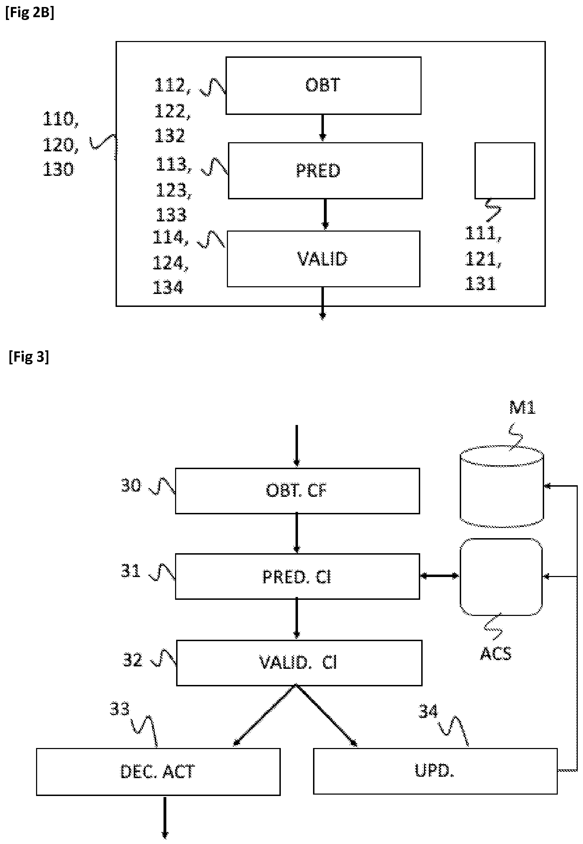

Dans cet exemple de réalisation de l'invention, les trois modules 110, 120, 130 sont organisés de façon similaire, par exemple selon l'architecture de la **figure 2B****.** Chaque module 110, 120, 130 comprend un sous-module OBT d'obtention et de traitement de données de mesures collectées par une ou plusieurs sondes dans le réseau, dans l'environnement de l'équipement hôte EH et au-delà, un sous-module DET de détermination d'une catégorie d'anomalies, respectivement d'attaques ou de défaillances, à l'aide ici d'un modèle de classification automatique 111, 121, 131 qui prend en entrée la pluralité de données de mesures et fournit en sortie une ou plusieurs catégories d'anomalies déterminées, respectivement d'attaques ou de défaillances, et un sous-module VALID de validation de la ou les catégories déterminées.

Le sous-module OBT obtient des pluralités de données de mesures représentatives d'une utilisation des ressources réseau de l'équipement hôte EH et plus généralement d'un comportement de l'équipement hôte EH dans le réseau à un instant t donné. Le sous-module OBT extrait à un instant donné des données de mesure collectées puis agrégées sur une période temporelle donnée comprenant ledit instant. Pour ce faire, il analyse les sources de collecte dont il dispose, telles que des journaux de connexions (pour « logs » en anglais), compteurs de sondes, systèmes de détection d'intrusion ou IDS (pour « Intrusion Detection System », en anglais), pare-feux, systèmes de contrôle d'accès, etc.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

On distingue trois types de données de mesures obtenues par le dispositif 100 :
- des premières données de mesures représentatives de caractéristiques communes permettant aussi bien de détecter une attaque qu'une défaillance du réseau de communication (et qui sont donc utiles à la fois pour détecter une attaque et une défaillance réseau). Ce sont des caractéristiques d'utilisation de ressources réseau qui peuvent prendre diverses formes telles qu'une forme numérique, par exemple pour des statistiques, compteurs, indicateurs de performance (ou KPI pour « Key Performance Indicators » en anglais) ou une forme textuelle comme par exemple pour des fichiers de logs, alarmes, tickets réseau, etc.). Ces données de mesures, lorsqu'elles prennent ou dépassent certaines valeurs pour les données numériques, ou lorsqu'elles remontent certaines informations ou correspondent à certains motifs (pour « pattern », en anglais) pour les données textuelles, sont symptomatiques de la présence d'une attaque ou d'une défaillance réseau. Par exemple, de telles données de mesures comprennent une mesure de consommation d'énergie, de consommation exhaustive ou d'épuisement d'énergie, de surcharge, de dépassement d'un seuil d'occupation des ressources de calcul et ou de communication, d'un taux de congestion, d'un niveau d'interférences, etc. ;
- des deuxièmes données de mesures représentatives de caractéristiques qui typiquement, lorsqu'elles présentent ou dépassent certaines valeurs spécifiques ou correspondent à certains motifs, ou encore remontent certaines informations, peuvent laisser présager la présence d'une attaque du réseau. Cette attaque peut être en cours ou à venir. Ces données de mesures sont donc pertinentes et utiles pour détecter une attaque en cours ou prédire une attaque à venir. Elles peuvent varier en fonction de la nature des attaques susceptibles d'affecter le réseau. Parmi les attaques visées, on peut citer à titre d'exemple les attaques par déni de service ou DoS (pour « Deny of Service », en anglais), les attaques globales ou distribuées de type réseau d'agents dormants (pour « Botnet », en anglais) et les attaques de type « menace floue » (pour « fuzzing threat », en anglais) qui consistent à essayer de mettre en défaut une machine en l'alimentant avec des données choisies au hasard. Par exemple, ces deuxièmes données de mesures concernent un taux d'erreurs de connexion, un taux d'erreurs relevées au niveau d'un équipement serveur du réseau, un nombre de messages rejetés, envoyés et/ou reçus, un taux de fausses alarmes générées par un système IDS et/ ou par un pare-feu ;
- des troisièmes données de mesures représentatives de caractéristiques qui typiquement, lorsqu'elles présentent ou dépassent certaines valeurs spécifiques, ou remontent certaines informations, peuvent laisser présager la présence d'une défaillance réseau. Ces données de mesures sont donc pertinentes et utiles pour détecter et caractériser une défaillance en cours ou à venir. Il s'agit par exemple d'un taux d'appels rejetés, d'un taux de congestion, d'un nombre d'utilisateurs rattachés à une cellule radio, d'un nombre de paquets de données circulant en descendant ou en remontant, une mesure de puissance RSRP (pour « Reference Signal Receive Power », en anglais) , une mesure de qualité RSRQ (pour « Reference Signal Receive Quality », en anglais), rapport signal sur bruit, alarmes, etc.

On note que les deuxièmes et les troisièmes données de mesures peuvent viser des caractéristiques distinctes d'utilisation des ressources du réseau ou partager certaines caractéristiques communes. Par ailleurs, on note que la pluralité de données de mesures pertinentes pour chaque type d'anomalie peut être définie dans des normes comme par exemple la norme 3GPP ou déterminée par des experts dans le domaine des réseaux et de la cyber-sécurité ou générée par un modèle automatique, mais qu'il est aussi envisageable de recourir à une solution d'intelligence artificielle pour construire des vecteurs de données de mesures qui maximisent les performances de détection de chaque module de détection, et les mettre à jour au cours du temps en fonction de la découverte de nouvelles attaques et/ou défaillances par exemple.

Selon l'invention, les premières données de mesures représentatives de caractéristiques communes à une attaque et une défaillance du réseau sont obtenues par le sous-module 112 du module 110 de détection d'anomalies, les deuxièmes données de mesures représentatives de caractéristiques spécifiques à une attaque sont obtenues par le sous-module 122 du module 120 de détection d'attaques et les troisièmes données de mesures spécifiques à une défaillance réseau sont obtenues par le sous-module 132 du module 130 de détection de défaillance du réseau.

En parallèle, les sous-modules OBT 112, 122, 12 forment des vecteurs de données de mesures qui alimentent les sous-modules PRED 113, 123, 133 de prédiction d'une classe d'anomalies, respectivement d'attaques et de défaillances correspondants.

Avantageusement, les sous-modules PRED 113, 123, 133 exploitent chacun les vecteurs de données de mesures obtenus pour déterminer une catégorie d'anomalies, respectivement d'attaques et de défaillances, en mettant chacun en œuvre, dans le mode de réalisation décrit ici, un modèle de prédiction dédié et construit à l'aide d'une technique d'intelligence artificielle. On note qu'un tel modèle de prédiction peut être mono-variable (pour « mono-label », en anglais), c'est-à-dire qu'il comprend une seule variable de sortie qui peut prendre des valeurs textuelles ou bien numériques. Avec une variable de sortie textuelle, de type classe par exemple, le modèle résout un problème de classification, alors que pour une variable de sortie numérique, comme par exemple une valeur temporelle, il résout un problème de régression. Lorsque la classe de sortie peut prendre plusieurs valeurs, comme par exemple « présence d'une attaque », « absence d'une attaque », « présence d'une défaillance » et « absence d'une défaillance », on parle de modèle multi-classes.

Le modèle de prédiction utilisé peut aussi être multi-variables (pour multi-labels, en anglais), c'est-à-dire qu'il prédit plusieurs variables de sortie à partir d'un seul vecteur de données de mesures en entrée, comme par exemple une variable de classe d'anomalies et une variable numérique et continue, comme par exemple une variable de temps. Avantageusement, le système est configuré pour prédire une attaque et/ou une défaillance et l'instant (présent ou futur) auquel elle se produit ou va se produire.

Bien sûr, l'invention n'est pas limitée à cet exemple et la détermination d'une catégorie d'anomalies peut aussi utiliser un modèle de prédiction basé sur des règles préétablies.

Avantageusement, dans chaque module, le modèle de prédiction est mis en œuvre par un système d'apprentissage supervisé ACS1, ACS2, ACS3 préalablement entraîné à l'aide d'un ensemble DS1, DS2, DS3 de données d'apprentissage étiquetées. Un tel système d'apprentissage supervisé est par exemple un système de classification automatique, connu en soi. Par exemple, chaque ensemble comprend des couples associant à une pluralité de premières, respectivement deuxièmes et troisièmes données de mesures ou vecteur de données de mesures, une étiquette (pour « label », en anglais) correspondant respectivement à la catégorie d'anomalies, d'attaques ou de défaillances que le système d'apprentissage supervisé doit produire en sortie pour ce vecteur présenté en entrée. Les ensembles d'apprentissage DS1, DS2, DS3 sont par exemple stockés dans une mémoire M du dispositif 100 qui peut être partagée par les trois modules 110, 120, 130. Avantageusement, les pluralités de premières, deuxièmes et troisièmes données de mesures collectées sont elles aussi stockées dans cette mémoire M. En variante, chaque module de détection 110, 120, 130 accède à sa propre mémoire et y stocke ses propres données.

Le système d'apprentissage supervisé mis en œuvre par chacun des modules 110, 120, 130 s'appuie sur une technique d'intelligence artificielle connue en soi, par exemple de type réseau neuronal profond tel qu'un réseau neuronal récurrent de type LSTM (pour « Long Short Term Memory », en anglais), un réseau neuronal convolutif, ou encore un réseau neuronal dense.

En ce qui concerne le sous-module VALID 114, 124, 134 de validation d'une catégorie d'anomalies, respectivement d'attaques et de défaillances, prédite, sa fonction de validation diffère selon qu'il s'agit du sous-module 114 intégré au module 110 de détection d'anomalies (générique) ou des sous-modules 124, 134 intégrés aux modules 120,130 de détection d'attaque respectivement de défaillance (spécifiques).

Plus précisément, l'apprentissage du module 110, du fait qu'il exploite des premières données de mesures représentatives de caractéristiques communes aux attaques et aux défaillances du réseau peut nécessiter plus de temps pour mettre en œuvre un mécanisme de prédiction performant et mature que les modules 120,130 de détection spécifiques. Par exemple, il est configuré pour produire en sortie au moins une catégorie qui indique que l'anomalie détectée est une attaque, une catégorie qui indique que l'anomalie détectée est une défaillance et une classe qui correspond à l'absence de détection d'anomalie, sans être nécessairement capable de détecter un type d'attaque ou de défaillance particulier. Lors du déploiement du dispositif 100 dans le réseau de communication RC, même s'il a subi une phase préalable d'apprentissage, son modèle de prédiction d'anomalie lui permet de détecter un écart par rapport à une situation normale, donc une anomalie, mais en revanche il n'est pas toujours capable de déterminer de façon fiable si l'anomalie détectée est une attaque et/ou une défaillance du réseau. Il va donc prédire si l'anomalie détectée est une attaque ou une défaillance, ou ni l'une ni l'autre, et demander une validation de la part des modules de détection spécifiques 120, 130. Le sous-module VALID 114 du module de détection 110 a précisément cette fonction. Les réponses des modules de détection spécifiques 120 et 130 vont permettre l'apprentissage progressif du modèle de classification du module 110 et l'amélioration des classifications. Selon l'invention, le module 110 transmet un message de demande de validation DV à au moins un des deux modules de détection spécifiques 120, 130, comprenant le vecteur V1(t) de premières données de mesures, la catégorie d'anomalies prédite CI1(t) par le premier module 110, l'instant t donné et un identifiant IDH de l'équipement hôte ou cible de l'anomalie. Le module spécifique destinataire 120, 130 est choisi en fonction de la catégorie prédite. Si la catégorie d'anomalies est de type attaque, le message DV est transmis au deuxième module 120 ; si elle est de type défaillance, il est transmis au troisième module 130 ; si les deux types de catégories ont été prédites pour le même vecteur d'entrée, la demande de validation est transmise aux deux modules spécifiques. On note que, lorsque la catégorie d'anomalies déterminée correspond à une absence d'attaque et ou de défaillance réseau, le module 110 peut ne rien transmettre aux modules spécifiques 120, 130. Néanmoins, il stocke en mémoire le résultat obtenu et transmet avantageusement une demande de validation qui regroupe plusieurs résultats négatifs obtenus sur une période temporelle prédéterminée. De la sorte, les modules spécifiques 120, 130 vérifient régulièrement que le module 110 ne génère pas de faux négatifs, c'est-à-dire qu'il ne passe pas à côté d'anomalies réelles du réseau, sans toutefois générer un trafic de données superflu.

Le message de demande de validation DV est reçu et traité par le sous-module VALID 124, 134 destinataire. Son rôle est de valider ou d'invalider la catégorie d'anomalies prédite par le premier module 110, en fonction des résultats de détection obtenus par le module spécifique 120, 130 auquel il appartient. Pour ce faire, il extrait du message reçu l'instant t et l'identifiant d'hôte associés à la catégorie d'anomalies à valider et il recherche, par exemple dans la mémoire M, s'il a détecté une attaque, respectivement une défaillance du réseau, associée à cet instant et cet hôte ou bien il déclenche la détermination d'une catégorie d'attaques respectivement de défaillances réseau à partir du vecteur de données de mesures qu'il a lui-même obtenu à l'instant t. Il compare la catégorie qu'il a lui-même prédite avec celle qu'il a reçue dans la demande de validation. Si elles correspondent, il répond au premier module en lui transmettant un message de réponse validant la catégorie d'anomalies. Si elles ne correspondent pas, par exemple parce qu'il n'a pas détecté d'attaque, respectivement de défaillance réseau, ou bien détecté une attaque, respectivement une défaillance, d'un autre type (si la demande de validation comprend un type d'attaque ou de défaillance détecté), il répond par un message invalidant la catégorie d'anomalies prédite par le module 110 et comprenant, à titre de correction, la catégorie d'attaques, respectivement de défaillances, qu'il a lui-même détectée en association avec le vecteur de premières données, l'instant t et l'identifiant d'hôte.

On note que le module valideur peut systématiquement inclure la classe d'attaques respectivement défaillances qu'il a détectée qu'elle corresponde ou non à la classe d'anomalies détectée par le module générique 110. Ainsi, le module générique obtient dans tous les cas la classe d'attaques respectivement de défaillances validée par le module spécifique.

Avantageusement, le sous-module 124, 134 détermine une valeur de récompense pour l'anomalie qu'il vient de valider ou d'invalider, positive si l'anomalie détectée par le module 110 correspond à une attaque, respectivement une défaillance, qu'il a détectée, et négative sinon. Une valeur de récompense négative correspond donc à une pénalité. Par exemple, les valeurs de récompense sont simplement +1, -1. Bien sûr, l'invention n'est pas limitée à cet exemple et une gamme de valeurs plus large peut être affectée à la récompense, de façon connue en soi, en appliquant par exemple la technique décrite dans le document de Servin et al., intitulé "Multi-Agent Reinforcement Learning for Intrusion Detection", publié dans l'ouvrage « European Symposium on Adaptive and Learning Agents and Multi-Agent Systems », par Springer, en 2008, pp. 211-223.

Le module spécifique 120, 130 insère cette valeur de récompense dans son message de réponse de validation RV. Il peut aussi la stocker en mémoire en association avec l'instant t de collecte du vecteur de premières données de mesures.

A réception du message de réponse de validation RV, le module de détection générique 110 extrait les informations qu'il contient. Si le message comprend une catégorie d'attaques, respectivement de défaillances validée différente de celle qu'il a détectée, il la stocke la catégorie en association avec le vecteur V1(t) de premières données de mesures, à la place de la catégorie d'anomalies CI1(t) prédite. Avantageusement, il met à jour son système d'apprentissage supervisé ACS1 en ajoutant cette nouvelle association à l'ensemble d'apprentissage DS1, en vue de déclencher une nouvelle phase d'apprentissage du modèle de classification de son système ACS1 à une date déterminée, qui peut dépendre notamment d'une fréquence d'apprentissage prédéterminée. Si le message comprend une valeur de récompense, le module de détection générique 110 peut avantageusement l'exploiter pour déterminer une nouvelle valeur de fréquence de l'apprentissage plus appropriée. En effet, le module de détection générique 110 est configuré pour maximiser sa récompense. Pour ce faire, il évalue, sur une période temporelle passée et à partir des valeurs de récompense qu'il a reçues, un taux de récompenses positives. Il utilise ce taux pour ajuster la fréquence d'apprentissage à une valeur qui lui permettra d'augmenter plus rapidement ses performances de classification. Un taux de récompenses positives élevé signifie que son modèle de classification est en train de converger et qu'il devient mature. Dans ce cas, le module de détection générique 110 peut diminuer la fréquence de l'apprentissage. Au contraire, s'il obtient un taux de récompenses positives faible, il peut augmenter la fréquence de l'apprentissage pour prendre plus rapidement en compte les corrections des modules de détection spécifiques 120, 130.

Un tel mécanisme de validation entre le module générique et les modules de détection spécifiques permet donc au module générique de détection d'anomalie 110 de se renforcer et d'améliorer ses performances au cours du temps.

De retour à la **figure 2A****,** une fois la validation de la classe d'anomalies effectuée, le sous-module DEC 150 décide d'une action de traitement à déclencher. Le but de ce sous-module 150 est de réagir quand une anomalie de type attaque et/ou défaillance est détectée dans le réseau de communication RC. Une telle action de traitement va permettre de corriger ou au moins de modérer l'impact de cette anomalie sur le fonctionnement du réseau. Classiquement, le sous-module DEC met en œuvre une technique de décision basée sur l'exécution de règles définies par exemple dans une politique (pour « policy », en anglais) de l'opérateur de ce réseau ou bien dans un modèle de renforcement ou d'optimisation. Par exemple, si une défaillance est détectée en lien avec une surcharge de fonctions virtualisées du réseau, une action de traitement peut être de migrer cette fonction sur une autre machine virtuelle ou de la ré-échelonner, c'est-à-dire de modifier sa configuration pour augmenter sa puissance de traitement. Si une défaillance de type congestion est prédite dans un futur proche, une action de traitement peut consister en un rééquilibrage des charges. Si la défaillance détectée concerne une antenne réseau qui ne fonctionne plus, une action de traitement pourrait être de demander à une autre antenne de prendre le relais. En cas d'attaque détectée, une action de traitement peut être de déconnecter le ou les équipements infectés du réseau, d'informer le pare-feu et le système de détection d'intrusion de l'identité des équipements infectés et finalement de mettre à jour les clés de chiffrement pour empêcher les attaquants d'intercepter des données sensibles échangées entre un système de détection d'intrusion IDS (pour « Intrusion Detection System », en anglais) et un système de prévention d'intrusion IPS (pour « Intrusion Prevention System », en anglais). On note que l'action de traitement peut être mise en œuvre par le dispositif 100 directement ou indirectement, par l'intermédiaire d'un autre équipement du réseau que le dispositif 100 notifie de la décision prise ou seulement de l'anomalie détectée par l'intermédiaire du sous-module DEC. Autrement dit, le dispositif 100 alerte et/ou décide et/ou agit. Avantageusement, le dispositif 100 qui vient d'être décrit met ainsi en œuvre le procédé de détection selon l'invention qui sera détaillé ci-après en relation avec la **figure 3****.**

En relation avec la **figure 3****,** on décrit désormais les étapes du procédé de détection d'anomalies, mises en œuvre au niveau du premier module 110 du dispositif de détection 100 selon un exemple de réalisation de l'invention.

Au cours d'une étape 30, une pluralité de premières données de mesures représentatives d'une utilisation anormale de ressources dudit réseau au niveau de l'équipement hôte EH est obtenue. Ces données sont associées à un instant donné t et ont été collectées dans le réseau de communication RC sur une période temporelle prédéterminée par différentes sondes ou fonctions de surveillance du réseau qui transmettent lesdites données au dispositif 100. Avantageusement, un vecteur V1(t) de premières données de mesures est formé. Comme précédemment décrit, il s'agit de données de mesures dites communes, car elles sont pertinentes pour la détection de tout type d'anomalie, que ce soit une attaque ou une défaillance. Il est associé à l'instant t et à un identifiant de ID_{H} de l'hôte 20.

En 31, une catégorie d'anomalies CI1 est prédite à l'aide du premier système d'apprentissage supervisé ACS1. Celui-ci a été préalablement entraîné à l'aide d'un ensemble de données d'apprentissage comprenant des couples associant des pluralités de premières données de mesures à des catégories d'anomalie. Avantageusement, il est capable de prédire au moins une des trois catégories suivantes :
- la présence d'une anomalie de type attaque,
- la présence d'une anomalie de type défaillance, et
- une absence d'anomalie.

Comme précédemment évoqué, il peut aussi prédire deux catégories d'anomalie distinctes pour un seul vecteur d'entrée V1(t). Notamment il peut prédire que l'anomalie détectée à l'instant t est à la fois une défaillance et une attaque. Par exemple, l'attaque est en cours à l'instant t et la défaillance est prévue dans un futur proche, du fait de l'attaque en cours.

En 32, il valide la catégorie prédite en émettant un message de validation DV auprès du deuxième module de détection d'attaques 120 et/ou au troisième module de détection de défaillances, selon la catégorie d'anomalies prédite. En effet, les systèmes d'apprentissage supervisé ACS2 et ACS3 des modules spécifiques 120, 130 convergent plus rapidement vers un état de maturité, notamment du fait qu'ils s'appuient chacun sur des vecteurs de données de mesures plus spécifiques au type d'anomalies qu'ils détectent, ce qui permet à leur système de classification d'apprendre et de converger plus rapidement. Avantageusement, la demande DV comprend l'instant t, le vecteur V1(t), la catégorie prédite CI(t) et l'identifiant ID_{H} de l'hôte.

A cet égard, on note que la demande de validation peut être transmise de façon immédiate ou différée. Par exemple, si la catégorie prédite est une absence d'anomalie, la demande de validation peut être temporairement stockée en mémoire et une demande groupée de validations peut être envoyée à l'expiration d'une période temporelle prédéterminée. Dans ce cas, il s'agit de valider le fait qu'aucune anomalie ne devait être détectée sur cette période temporelle. Un avantage est d'éviter de générer un trafic de message trop important.

En revanche, dès lors que la catégorie prédite une présence d'anomalie, l'envoi du message de demande de validation est préférentiellement déclenché immédiatement, pour ne pas perdre de temps inutilement avant le déclenchement d'une action de traitement.

Sur réception **33** d'une réponse RV validant la présence d'une anomalie, de type attaque et/ou défaillance, une action de traitement de l'anomalie est décidée en **34,** puis une commande de déclenchement de cette action de traitement est transmise en **35** au dispositif actionneur 200.

A ce stade, plusieurs cas sont envisagés :
a) la catégorie prédite est une présence d'attaque et/ou de défaillance, qui est confirmée par le deuxième module de détection 120 et/ou le troisième module de détection 130 ;
b) la catégorie prédite est une présence d'attaque et/ou de défaillance, qui est infirmée par le deuxième module de détection 120 et/ou le troisième module de détection 130 ;
c) la catégorie prédite est une absence d'anomalie et l'absence d'attaque et de défaillance est confirmée par le deuxième module de détection 120 et/ou le troisième module de détection 130 ;
d) la catégorie prédite est une absence d'anomalie et elle est infirmée par l'un au moins des deux modules de détection spécifiques 120, 130, qui a détecté une attaque et/ou une défaillance à l'instant t.

On comprend que seuls les cas a) et d) correspondent à des présences d'anomalies validées qui justifient de déclencher une action de traitement.

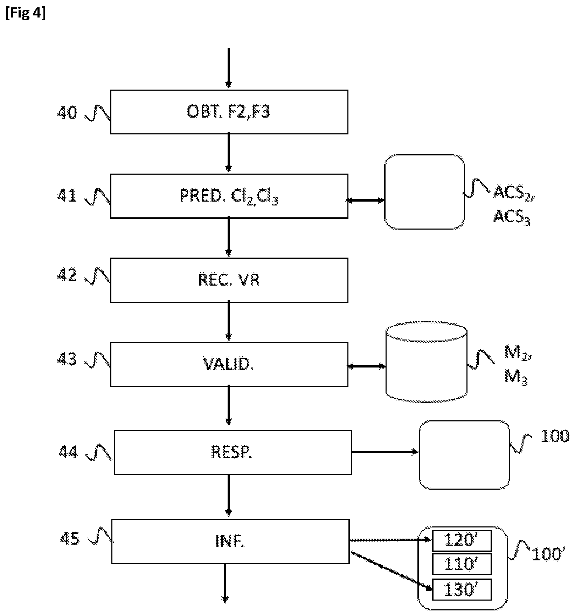

On décrit désormais, en relation avec la **figure 4****,** les étapes du procédé de détection d'une anomalie, mises en œuvre respectivement par les modules de détection d'attaque 120 et de défaillance 130 selon un mode de réalisation de l'invention.

En **40,** une pluralité de deuxièmes données de mesures représentatives d'une attaque de ressources dudit réseau est obtenue à l'instant t pour l'équipement hôte EH associé à l'identifiant ID_{H}. Un vecteur de deuxièmes, respectivement troisièmes, données de mesures V2(t), V3(t) est formé. Ce vecteur est présenté en **41 en** entrée du deuxième, respectivement troisième, modèle de classification ACS2, ACS3 préalablement entraîné pour fournir en sortie une prédiction d'une catégorie d'attaque, respectivement de défaillance, parmi plusieurs catégories comprenant au moins une catégorie représentative d'une présence d'attaque, respectivement de défaillance et une catégorie représentative d'une absence d'attaque, respectivement de défaillance. Avantageusement, la catégorie d'attaque appartient à un groupe comprenant au moins un premier type d'attaque, par exemple DoS, un deuxième type, par exemple Botnet et un troisième type par exemple menace floue. On note que chacune de ces attaques peut faire l'objet en variante d'une catégorie d'attaques distincte au niveau du modèle de classification ACS2, ou que d'autres types d'attaques peuvent être envisagées. Respectivement, la catégorie de défaillance appartient à un groupe comprenant au moins un premier type de défaillance, par exemple une congestion dans le réseau, un deuxième type de défaillance, par exemple un problème d'accessibilité et un troisième type de défaillance, par exemple une coupure d'appel (pour « drop call », en anglais). Son modèle de classification automatique ACS2, ACS3 a préalablement été entraîné à l'aide d'un deuxième, respectivement troisième, ensemble DS2, DS3 de données d'apprentissage comprenant des couples associant un vecteur de deuxièmes, respectivement troisièmes, données de mesures collectées à un instant donné, à une étiquette, c'est-à-dire à la catégorie d'attaques, respectivement de défaillance, à associer à ce vecteur.

On suppose que le vecteur V2(t), respectivement V3(t), a conduit à la prédiction en 31 de la catégorie CI2(t), respectivement CI3(t).

A ce stade, on comprend que les modules de détection spécifiques 120, 130 ont pour fonction de renforcer le modèle de classification d'anomalie du module de détection générique 110. Leurs modèles de classification sont en effet supposés avoir atteint plus rapidement des niveaux de performance et de maturité plus élevés que le module générique 110.

En 42, un message de demande de validation DV est reçu en provenance du premier module de détection d'anomalies 110. Comme précédemment décrit, ce message comprend au moins le vecteur de premières données de mesures V1t(), la catégorie d'anomalies prédite CI1(t), l'instant t et l'identifiant ID_{H} de l'équipement hôte au voisinage duquel la collecte de données a été faite. Par exemple, la catégorie CI1(t) soumise à validation correspond à une présence d'attaques, respectivement de défaillance. Le deuxième module 120 procède préférentiellement à prédiction d'une catégorie d'attaque en utilisant son modèle de classification sur réception de la demande de validation du module 110. De façon alternative, il recherche en mémoire, ses résultats de prédiction associés à l'instant t et à l'identifiant ID_{H} et compare en **43** la catégorie CI2(t) qu'il a prédite à celle qu'il a reçue CI1(t). S'il y a correspondance, il répond en **44** en validant la prédiction du premier module. Sinon, il invalide la prédiction du premier module et insère dans son message de réponse la catégorie CI2(t) qu'il a lui-même prédite, à titre de correction. Comme précédemment évoqué, il peut avantageusement déterminer une valeur de récompense R(t), qu'il insère également au message de réponse. Ainsi, le message de réponse RV comprend l'instant t, le premier vecteur de données V1(t), l'identifiant de l'équipement hôte ID_{H}, la catégorie d'attaque corrective CI2(t) et, optionnellement la valeur de récompense R(t).

Dans le mode de réalisation décrit ici, avantageusement en **45,** un message d'information IF est transmis par le deuxième module 120 à un module de détection d'attaques 120' d'un dispositif 100' de détection d'anomalie appartenant à un voisinage réseau du dispositif de détection 110. On désigne par voisinage réseau les équipements du réseau qui ont une connectivité directe, c'est-à-dire à un saut, avec le dispositif 100. Par exemple, l'échange de données entre les modules 120, 120' des dispositifs de détection voisins 110 et 110' est assurée à l'aide d'interfaces logicielles de type API (pour « Application Programming Interfaces », en anglais) basées sur une architecture logicielle de type REST (pour « Representational State Transfer », en anglais) ou sur la mise en place d'une plateforme logicielle ou bus de communication de flux de données de type Kafka.

Les données contenues dans un tel message d'information sont destinées à être injectées dans l'ensemble d'apprentissage du module de détection spécifique destinataire pour sa prochaine phase d'apprentissage. Un but de cette transmission d'information est d'enrichir l'ensemble d'apprentissage des dispositifs de détection d'anomalies voisins en renforçant les modèles de leurs modules de détection spécifiques.

Ainsi, selon l'invention, plusieurs dispositifs de détection d'anomalies localisés en différents points du réseau de communication RC sont interconnectés pour renforcer mutuellement leurs modèles de prédiction.

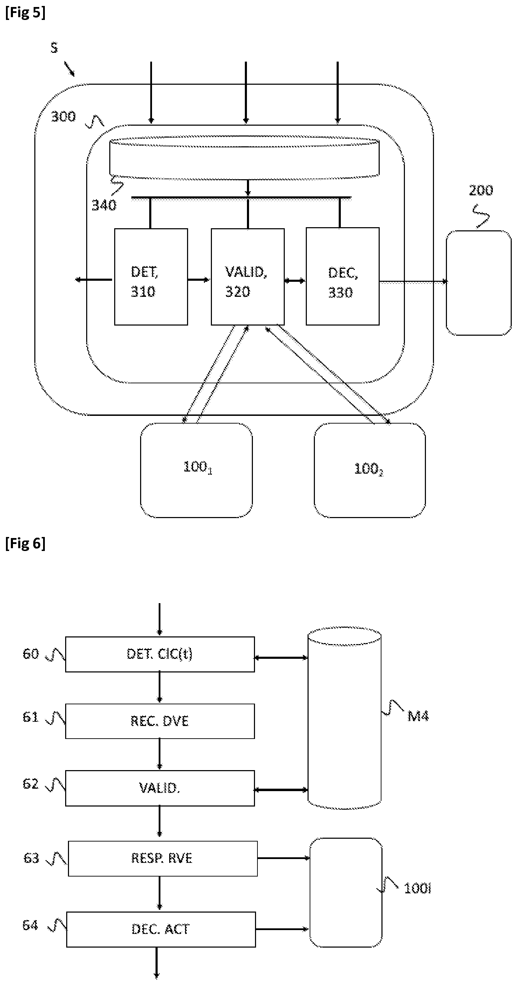

En relation avec un autre exemple de réalisation de l'invention illustré par la **figure 5****,** on décrit maintenant un système de gestion S d'anomalies comprenant plusieurs dispositifs de détection d'anomalies 100₁, 100₂ du réseau de communication RC et un dispositif 300 de coordination de détection d'anomalies connecté aux dispositifs 100₁, 100₂. Un tel dispositif 300 est configuré pour coordonner les actions de traitement des anomalies détectées par les différents dispositifs de détection d'anomalie 100₁, 100₂ et pour renforcer les modèles de classification de chacun. Pour ce faire, il est équipé de son propre dispositif 310 de détection d'attaques et de défaillances, qui peut être par exemple un dispositif de détection d'anomalies selon l'invention, tel qu'il vient d'être décrit en relation avec les **figures 2A** **et** **2B****,** ou bien comprendre un dispositif de détection d'attaques et un dispositif de détection de défaillances, indépendants, selon l'art antérieur. Dans les deux cas, il s'appuie sur un vecteur de données de mesures collectées dans le réseau de communication RC par différentes sondes ou fonctions de surveillance du réseau qui transmettent lesdites données au dispositif 310. Avantageusement, il comprend en outre un module 320, VALID de validation, apte à recevoir en provenance d'au moins un dispositif de détection d'anomalies requérant 100i avec i entier compris entre 1 et I, I étant le nombre de dispositifs de détection d'anomalies supervisés par le dispositif 300, un message de demande de validation externe DVE comprenant au moins une catégorie d'attaques CI2(t), respectivement de défaillances CI3(t)détectée par ledit dispositif de détection d'anomalies requérant, à valider la catégorie d'attaques, respectivement de défaillances reçue et à transmettre un message de réponse de validation RVE au dispositif de détection d'anomalie requérant. Il comprend enfin un module 330, DEC de décision et de déclenchement d'une action de traitement auprès d'au moins un dispositif actionneur 200. Avantageusement, il comprend aussi une mémoire 340 dans laquelle il stocke les données de mesures, les ensembles de données d'apprentissage du ou des modèles de classification mis en œuvre par son dispositif de détection d'anomalies interne, etc.

Un tel dispositif de coordination 300 peut être intégré dans un équipement nœud du réseau ou bien, lorsque le réseau est virtualisé, hébergé dans une machine virtuelle mettant en œuvre les ressources physiques d'un tel équipement nœud.

Avantageusement, le dispositif 300 met en œuvre un procédé de coordination de détection d'anomalies selon l'invention qui va maintenant être décrit en relation avec le logigramme de la

### figure 6.

En **60,** au moins une catégorie d'anomalies CIC(t) est détectée à partir d'un vecteur VC(t) de données de mesure associées à l'instant t par le dispositif de coordination 300.

En 61, il reçoit un message de demande de validation externe DVE en provenance du deuxième module 120 respectivement du troisième module 130 d'un dispositif de détection d'anomalies 100₁, 100₂, comprenant un vecteur de données de mesures V2(t) respectivement V3(t) associées à l'instant t, l'identifiant d'un équipement hôte ID_{H} au niveau duquel l'utilisation des ressources est caractérisée par ce vecteur de données de mesures, une catégorie d'attaques CI2v(t) respectivement de défaillances Cl3(t)détectée et une action de traitement A1(t). Avantageusement, cette catégorie d'attaques respectivement de défaillances a été préalablement validée et, si nécessaire corrigée par un des modules spécifiques 120, 130 du dispositif de détection d'anomalies requérant.

En **62,** le dispositif de coordination 300 compare la catégorie CI2(t), CI3(t) reçue avec celle que son propre dispositif de détection d'anomalies 310 a lui-même prédite CIC(t) en **60** à réception des données de mesures collectées à l'instant t ou bien il déclenche une détection d'anomalies à réception du message de demande de validation reçu du dispositif 100, sur la base de son propre vecteur de données de mesures VC(t). Ce vecteur de données de mesures peut avoir une partie ou l'intégralité de ses données communes avec le vecteur V1(t). S'il y a correspondance, il émet en **63** un message de réponse qui valide la catégorie d'attaques respectivement de défaillances détectée par le dispositif 100i et éventuellement l'action de traitement A1(t). Il peut aussi comprendre une action corrective AS(t) à la place de l'action A1(t). Sinon, le message de réponse RS émis comprend la catégorie CIC(t), à la place de la catégorie CI2(t), CI3(t) et une action de traitement corrective AS(t). Avantageusement, le message de réponse RVE comprend aussi une valeur de récompense RS(t) qui peut être déterminée par le dispositif de coordination 300 selon une technique analogue à celle évoquée précédemment pour le dispositif de détection d'anomalies 100.

Avantageusement, dans un mode de réalisation de l'invention, le dispositif 300 gère une pluralité I, avec I entier supérieur ou égal à 2, de dispositifs de détection d'anomalies 100i et met en œuvre une détermination d'une fonction d'utilité de chaque dispositif de détection d'anomalies 100i. A cet effet, le dispositif 300 procède de la façon suivante.

Les modules 120i de détection d'attaque respectifs de chacun des dispositifs de détection d'anomalies 100i sont modélisés sous la forme d'un paramètre ${ψ}_{i}^{Attacks} = \left\{γ, δ, θ\right\}$, où i est l'indice du dispositif de détection d'anomalies 100i qui communique directement avec le dispositif de coordination 300, y ={*γ*₁, ... , *γₘ*} un vecteur de données de mesures correspondant aux deuxièmes données de mesures) que le module de détection d'attaques utilise pour surveiller sa cible (équipement hôte EH dans l'exemple envisagé à la **figure 1**) et m est le nombre de données de mesures du vecteur d'entrée y . On note que ce nombre m peut varier dans le temps du fait que les experts en sécurité informatique et en réseau peuvent ajouter au vecteur de données de mesures une nouvelle donnée de mesure pertinente et/ou supprimer une donnée de mesures devenue obsolète. La catégorie d'attaque δ = {Normal, Attaque 1, Attaque 2,..., Attaque J } correspond à la sortie du modèle de classification du module de détection d'attaques 120i, où J est le nombre total de types d'attaques pouvant être détectées par le module 120i considéré. Dans l'exemple illustratif envisagé ici, trois types d'attaques sont considérés comme indiqué précédemment, à savoir le déni de service DoS, le botnet et les menaces floues. *θₜ*(*γ, δ*) (noté ici par souci de simplification *θ*) désigne une valeur de récompense qui augmente lorsque le module de détection d'attaques 120i détecte correctement une attaque et que celle-ci est confirmée par le dispositif de coordination 300. Dans le cas contraire, la valeur de la récompense *θₜ* diminue. Si le module de détection d'attaques persiste à produire des catégories d'attaques erronées, il sera considéré comme un module infecté (par l'attaquant) et les experts en cyber sécurité pourront décider de remplacer ce module ou de l'alimenter avec un nouvel ensemble de données d'apprentissage.

De façon similaire, les modules de détection de défaillances 130i sont modélisés sous la forme d'un paramètre ${ψ}_{i}^{Défaillances} = \left\{γ′,δ′,θ′\right\}$ où *γ'* = {*γ'*₁, ..., *γ'_{m'}*} correspond au vecteur de troisièmes données de mesures associé à l'élément cible EH que le module de détection de défaillances 130i surveille et utilise comme entrée de son modèle de classification, m' désignant le nombre de données de mesures contenues dans ce vecteur. Ce nombre peut lui aussi être mis à jour par les experts du réseau. La catégorie de défaillance *δ'* = {Normal, Défaillance1, Défaillance 2, ..., Défaillance J'} correspond à la sortie du modèle de classification du module 130i. J' est le nombre total de types de défaillances pouvant être détectées par le module 130i considéré. Il peut varier dans le temps. Par exemple, les types de défaillances sont un problème d'encombrement des cellules du réseau, un problème d'interférence, un rejet d'appel, un problème de surcharge des machines virtuelles, un problème de dégradation d'un service, une perte de paquets, un problème d'interfaces, etc. *θₜ'*(, *δ'*) (noté ici par souci de simplification *θ'* désigne une valeur de récompense qui augmente lorsque le module 130i détecte correctement une défaillance et diminue dans le cas contraire. Si le module 130i persiste à fournir des détections erronées sur une période temporelle prédéterminé, les experts du réseau pourront décider de le remplacer ou de l'alimenter avec un nouvel ensemble de données d'apprentissage.

Par exemple, dans le mode de réalisation décrit ici, la valeur d'utilité ${U}_{t}^{i}$ du dispositif de détection d'anomalie 100i est calculée comme suit : ${U}_{t}^{i} = \frac{{D}_{t} - \left({P}_{t}+{N}_{t}\right)}{{AF}_{t}}$ (1)

Où Dₜ est le nombre d'attaques et de défaillances qui ont été correctement détectées par le dispositif 100i ;

Pₜ et Nₜ sont respectivement les nombres de faux positifs et de faux négatifs fournis par le dispositif 100i par rapport aux détections du dispositif de coordination 300; et

AFt est le nombre total d'attaques et de défaillances détectées dans le réseau de communication RC à l'instant t par le dispositif de coordination 300.

De façon analogue, le dispositif de coordination 300 calcule la valeur d'utilité *U'ₜⁱ* du module de détection d'attaques 120i et la valeur d'utilité *U"ₜⁱ* du module de détection de défaillances 130i du dispositif 100i.

A chaque instant t considéré, le dispositif de coordination 300 calcule la valeur d'utilité *Uₜⁱ* du dispositif de détection d'anomalies 100i et compare la valeur calculée avec celle obtenue à l'itération précédente et met à jour la valeur de récompense RSi(t) en conséquence.

Plus précisément, la récompense RSi(t) correspond à la valeur de gain calculée pour le module de détection spécifique 120i, 130i qui a validé l'anomalie que le dispositif de coordination 300 est en train d'évaluer. On désigne par *θ'ₜ* la valeur de gain destinée au module 120i de détection d'attaques et *θ"ₜ* la valeur de gain destinée au module 130i de détection de défaillances. Les valeurs de *θ'ₜ* respectivement *θ"ₜ* augmentent quand *U'ₜⁱ* >*U'*_{*t*-1}*ⁱ* respectivement *U"ₜⁱ* >*U"*_{*t*-1}*ⁱ.*

A la fin de chaque itération, le dispositif de coordination 300 commande aux modules de détection d'attaque et de défaillance 120i, 130i du dispositif 100i de mettre à jour leurs modèles de classification respectifs. Pour ce faire, il choisit des couples de vecteurs de deuxièmes, respectivement troisièmes données de mesures et de catégories d'attaques, respectivement de défaillances pour lesquels la catégorie d'attaques respectivement de défaillances qu'il a prédite ne correspond pas à celle transmise par le dispositif 100i et qui génèreraient pour chacun de ces modules spécifiques une valeur d'utilité *U'ₜⁱ* and *U'*_{*t*-1}*ⁱ* augmentée.

Avantageusement, le dispositif de coordination 300 met à jour les valeurs d'utilité du dispositif de détection d'anomalie 100i de façon récursive et estime pour l'itération t+1 les valeurs optimales des vecteurs de données de mesures ((*γ'*_{*t*+1}, *γ"*_{*t*+1}), des valeurs de récompense (*θ'*_{*t*+1}, *θ"*_{*t*+1}) et des catégories d'attaques et de défaillances (*δ'*_{*t*+1} , *δ"*_{*t*+1}) correspondantes, comme suit : $U {∗}_{t + 1} \left(γ{′}_{t + 1},γ{"}_{t + 1}, δ{′}_{t + 1},δ{"}_{t + 1}\right) = {U}_{t} \left(γ{′}_{t},γ{"}_{t}, δ{′}_{t},δ{"}_{t}\right) + α ∗ \left[\begin{matrix}θ {′}_{t + 1} + θ {"}_{t + 1} + β ∗ \\ max {U}_{t} \left(γ{′}_{t + 1} ,γ{"}_{t + 1}, δ{′}_{t + 1}, δ{"}_{t + 1}\right) - {U}_{t} \left(γ{′}_{t},γ{"}_{t}, δ{′}_{t}, δ{"}_{t}\right)\end{matrix}\right]$ (2) où α ∈ ]0, 1[ est le taux d'apprentissage et *β* ∈ ]0, 1[ est une constante qui correspond à un facteur de décote (pour « discount », en anglais). Une telle fonction d'utilité est par exemple décrite dans le document de Servin et al., déjà cité. Bien sûr, d'autres fonctions d'utilité peuvent être utilisées, par exemple en modifiant les valeurs des paramètres *α* et *β*.

Ainsi, le dispositif de coordination 300 peut décider l'ajout de nouvelles données de mesures ou le remplacement d'anciennes données de mesures dans le vecteur de données de mesures V2, V3 collectées par le dispositif de détection d'anomalies 100i. Il les lui transmet dans le message de réponse RS(t) à la demande de validation reçue du dispositif 100i, avec la catégorie CIC(t) qu'il a prédite, et la valeur de récompense *θ'ₜ* et/ou *θ"ₜ* selon la catégorie d'anomalies. Si la classe CIC(t) est une catégorie d'attaques, les informations transmises, à savoir les nouvelles données de mesures, la classe CIC(t) et la récompense *θ'ₜ* sont traitées et enregistrées par le module de détection d'attaques 120i du dispositif 100i ; si la catégorie CIC(t) est une catégorie de défaillances, les informations transmises, à savoir à savoir les nouvelles données de mesures, la classe CLC(t) et la récompense *θ"ₜ* sont traitées et enregistrées par le module de détection de défaillances 130i du dispositif 100i. Bien sûr, plusieurs catégories CIC(t) peuvent être contenues dans le message de réponse RS(t), lorsque plusieurs anomalies ont été détectées à l'instant t par le dispositif de coordination 300. Dans ce cas, les informations sont transmises aux modules concernés et chacun reçoit la valeur de récompense *θ'ₜ, θ"ₜ* qui lui revient.

Le dispositif de coordination 300 peut aussi décider de modifier un paramètre de configuration du système d'apprentissage supervisé du module de détection d'attaques respectivement de défaillances 120i, 130i, comme par exemple un taux d'apprentissage (pour « learning rate », en anglais).

En **64,** le dispositif de coordination 300 décide d'une action de traitement à déclencher pour remédier à l'anomalie détectée à l'instant t. Il envoie un message de commande au dispositif actionneur 200 situé à proximité de l'équipement hôte EH concerné par l'anomalie.

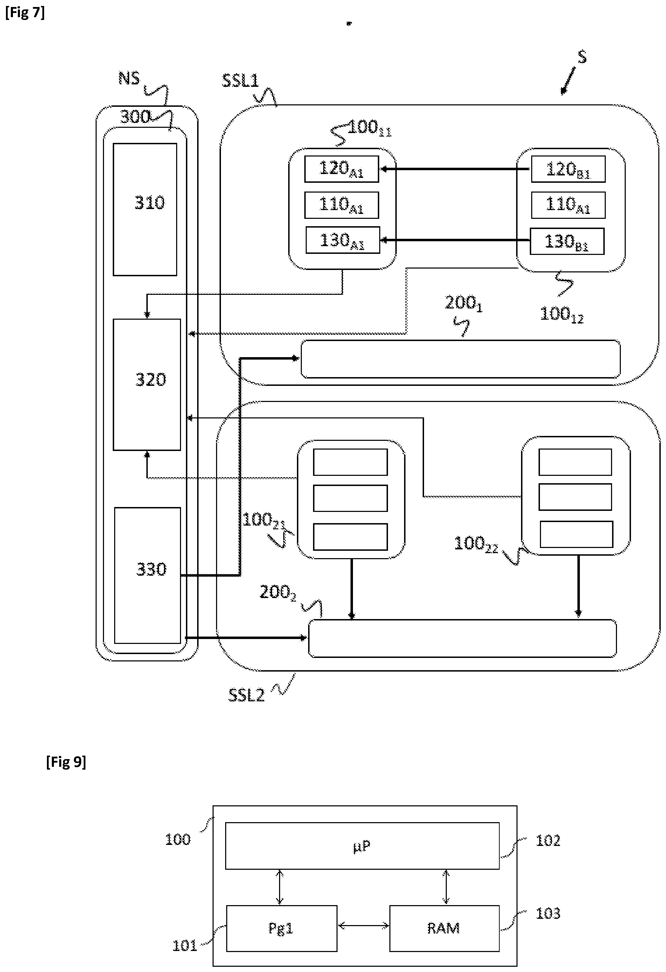

On considère maintenant le cas particulier d'un réseau de télécommunication RC dont l'architecture est telle que spécifiée dans la nouvelle norme 5G du 3GPP. Sur la **figure 7****,** on a représenté une tranche NS du réseau RC. Cette tranche comprend deux sous-tranches SSL1 et SSL2 qui peuvent appartenir à des entités administratives, telles que des fournisseurs de services de réseau, distinctes ou non. L'infrastructure de chaque sous-tranche peut être à la fois physique et virtualisée. Dans cet exemple, chaque sous-tranche SSL1, SSL2 comprend deux dispositifs de détection d'anomalie 100₁₁, 100₂₁, respectivement 100₁₂, 100₂₂ et un dispositif actionneur 200₁, 200₂ selon l'invention. La tranche NS comprend un dispositif de coordination 300 selon l'invention en charge de coordonner les détections d'anomalies pour la tranche NS et les actions de traitement de ces anomalies.

Les données de mesures sont collectées en continu ou à des instants déterminés par les équipements de l'infrastructure physique et virtuelle de la tranche NS. Les données de mesures peuvent être collectées à partir de différentes sources : Indicateurs de performance clés (KPI), alarmes, journaux. Pour chaque sous-tranche, un module d'ingénierie des caractéristiques (non représenté) permet la collecte des données de mesures, leur surveillance et leur catégorisation en données de mesures d'attaques, données de mesures de défaillances et données de mesures communes avec le type d'anomalie (c'est-à-dire le type d'attaque ou le type de défaillances).

### Phase initiale de déploiement et d'apprentissage d'un dispositif de détection d'anomalies

La phase de déploiement consiste en la première instanciation des dispositifs de détection d'anomalies, qu'on appelle aussi agent de détection d'anomalies ou AFPA (pour « Attack and Failure Prediction agent », en anglais) dans le contexte d'une architecture 5G. Selon une première option, l'apprentissage de chaque agent AFPA est par exemple réalisé hors ligne à partir de données de mesures collectées hors ligne puis en injectant le modèle formé dans l'agent concerné.

Selon une deuxième option, il peut également être réalisé en ligne de la façon suivante :
- les données de mesures collectées sont sauvegardées dans une mémoire, par exemple organisée sous la forme d'une base de données, qu'on appelle lac de données DL. Cette base de données comprend trois partitions, une première partition réservée aux données de mesures communes aux attaques et aux défaillances, une deuxième partition réservée aux données de mesures relatives aux attaques de sécurité et une troisième partition réservée aux données relatives aux défaillances réseau ;
- dans chaque sous-module (commun et spécifique tels que décrits précédemment) d'un agent AFPA, une phase d'apprentissage en ligne est mise en œuvre pour apprendre un modèle de prédiction capable de détecter et/ou de prévoir les anomalies/attaques/défaillances en cours ou futures. Ainsi, trois modèles de prédiction sont formés. Le premier modèle est dédié à la détection des anomalies en utilisant les caractéristiques communes stockées dans la première partition de la base de données commune DL. Le deuxième modèle est dédié à la détection/prévision des attaques en utilisant la deuxième partition de la base de données et le troisième modèle est dédié à la détection/prévision des défaillances en utilisant la troisième partition de la base de données DL ;
- L'étape précédente est réalisée successivement sous-tranche par sous-tranche afin de permettre d'apprendre le comportement de chaque sous-tranche avec une vue fine. En parallèle, au niveau de la couche NS, le dispositif de coordination 300 est configuré pour apprendre un modèle général de prédiction d'anomalies pour la tranche NS. Il a une visibilité sur toutes les sous-tranches SSL1, SL2 de la tranche NS et obtient les données de mesures obtenues par chaque sous-tranche, par exemple par un mécanisme de collecte de données de mesures configuré dès l'instanciation des tranches.

### Phase d'exécution d'un dispositif de détection d'anomalies

La phase d'exécution exploite le modèle de prédiction d'anomalies issu de la phase d'apprentissage. Toutefois, comme précédemment évoqué, les modèle de prédiction peuvent être soumis périodiquement à de nouvelles phases d'apprentissage pendant la phase d'exécution, pour qu'ils continuent à évoluer de manière interactive et améliorent leur précision de détection.

Les données de mesures sont collectées préférentiellement de façon régulière à partir de l'infrastructure au niveau de chaque sous-tranche SSL1, SSL2 par le module d'ingénierie des caractéristiques correspondant. Ces données de mesures ne sont pas étiquetées. Par exemple, des données de mesures sont collectés périodiquement avec une période T de l'ordre par exemple de quelques millisecondes. Bien entendu cette période varie en fonction du contexte d'application de l'invention, et l'homme du métier saurait adapter cette période à ce contexte.

Les données de mesures collectées sont sauvegardées dans le lac de données, dans la partition adaptée et selon le format des vecteurs de données de mesures utilisés dans la phase d'apprentissage. Il convient de noter que les vecteurs de données de mesures peuvent aussi être transmis directement aux dispositifs de détection d'anomalies de la sous-tranche sans être stockés dans le lac de données. Pour ce faire, un mode de transfert adapté, par exemple selon un format de message de type JSON et un bus de communication de type Kafka peut être utilisé.

Chaque vecteur de données reçu est traité par le dispositif de détection d'anomalies qui prédit en sortie une catégorie d'anomalies selon le procédé de détection d'anomalies qui vient d'être décrit en relation avec les **figures 3** **et** **4****.** Le modèle de prédiction d'anomalies du module de détection d'anomalies générique 110i permet de prédire si l'instance de vecteur reçue correspond à un comportement normal ou à une anomalie. Si une anomalie est détectée, il prédit en outre s'il s'agit d'une attaque ou d'une défaillance réseau, et éventuellement, selon ses capacités et sa configuration, de quel type d'attaque ou de défaillance il s'agit. Une fois la prédiction réalisée, un message de demande de validation comprenant le vecteur de données de mesures communes et la catégorie prédite est transmis à au moins un des deux modules de détection spécifiques 120i, 130i en fonction de la catégorie d'anomalies prédite. Le module de détection spécifique interrogé répond en transmettant, à titre de correction, son propre résultat de détection si la catégorie qu'il a prédite diffère de celle qu'il a reçue. Optionnellement, il ajoute une valeur de récompense. Le modèle de prédiction du module de détection générique fait évoluer son modèle en fonction de la réponse reçue. Notamment, il intègre le couple formé par le vecteur de premières données de mesures et la catégorie d'attaques, respectivement de défaillances validée dans son ensemble de données d'apprentissage. Il exploite en outre le cas échéant la valeur de récompense pour déterminer une prochaine échéance d'apprentissage. De la sorte, son modèle de prédiction est renforcé afin d'améliorer ses performances.

En parallèle, les modèles de prédiction d'attaques et de défaillances des modules de détection spécifiques de l'agent AFPA sont alimentés par leurs voisins. Les modules spécifiques des agents voisins, dans l'exemple de la **figure** 7 les modules 120₂₁, 130₂₁ de l'agent 100₂₁ transmettent aux modules correspondants 120₁₁, 130₁₁ de l'agent 100₁₁ des messages d'information concernant des attaques/défaillances correspondant à des détections d'anomalies qu'ils ont validées. Réciproquement les modules spécifiques 120₁₁, 130₁₁ de l'agent 100₁₁ font de même. De la sorte, les agents de détection d'anomalies d'une même sous-tranche enrichissent mutuellement leurs bases d'apprentissage.

Enfin, les modèles de prédiction d'attaques et de défaillances des agents de détection d'anomalies de chaque sous-tranche SSL1, SSL2 sont également renforcés par le dispositif de coordination 300 de la tranche NS. Comme précédemment décrit, ce dernier reçoit en effet les détections d'attaques/défaillances (préalablement validées en interne) de la part de chacun des agents AFPA de détection d'anomalies qu'il coordonne. En effet, son rôle est de s'assurer que les agents AFPA de détection d'anomalies qu'il gère sont fiables et stables. Pour ce faire, il s'appuie sur son propre modèle de prédiction, préalablement entraîné à partir d'un ensemble de données d'apprentissage suffisamment grand pour qu'il soit digne de confiance pour valider et, le cas échéant, corriger la catégorie reçue à l'aide de ses propres résultats. Avantageusement, le dispositif de coordination 300 ajoute une récompense/pénalité à sa réponse pour influencer la fréquence de mise à jour des modèles de prédiction de l'agent ayant requis une validation de sa part et, en particulier, de ses phases d'apprentissage. Avantageusement, la fiabilité des modèles de prédiction de l'agent de détection d'anomalies peut être évaluée par le dispositif de coordination 300 à l'aide des mesures de la liste suivante fournie à titre d'exemple et non exhaustive :
- Taux de faux positifs ou FP;
- Taux de faux négatifs ou FN ;
- Taux de classification correcte ou TCR, c'est-à-dire la somme des vrais négatifs TN et des vrais positifs TP sur le nombre total d'instances NT : TCR= (TP+TN)/NT ;
- Mesure de précision Pr correspondant au ratio entre le nombre de vrais positifs TP et la somme des vrais positifs TP et des faux positifs FP : Pr= TP/(TP+FP)
- Mesure de rappels Re, mesurant les instances d'une catégorie qui sont correctement prédites ou vrais positifs (TP) sur le nombre d'instances de cette classe : Re = TP/(TP+FN)
- Score F1, c'est-à-dire une moyenne pondérée entre la mesure de précision et la mesure de rappels, la meilleure valeur du score F1 correspondant à 100% et sa pire valeur à 0% : F1 =2.Pr.Re/(Pr+Re);
- Taux d'erreur de prédiction, par exemple de classification, tel que l'erreur quadratique moyenne, l'erreur quadratique absolue...

Ces mesures peuvent être appliquées sur des données d'apprentissage dans une phase d'entraînement en utilisant une technique de validation croisée (comme celle utilisée par le modèle de prédiction des anomalies) ou sur des données de test.

En outre, dans le mode de réalisation décrit ici, lorsqu'il valide une anomalie détectée par un agent AFPA, le dispositif de coordination 300 alerte son module actionneur 330, aussi appelé orchestrateur, en lui transmettant l'identifiant ID_{H} de l'équipement hôte ou de la fonction de virtualisation concerné, plus généralement de l'élément cible au sens de l'invention, l'instant t associé et la catégorie d'attaque/de défaillance détectée. En fonction de la notification reçue, le dispositif actionneur 330 décide soit de traiter le problème au niveau de tranche NS soit de commander le déclenchement d'actions correctives par le dispositif actionneur 200₁ au niveau de la sous-tranche SSL1,SSL2 concernée.

Pour limiter le trafic de données engendré par le flux de messages de validation, d'alerte et de commande de traitement selon l'invention, une option est de regrouper certains de ces messages en un seul. Par exemple, le dispositif de coordination 300 peut agréger ses réponses de validation à plusieurs demandes reçues au cours d'une période temporelle prédéterminée d'un même agent de détection d'anomalies.

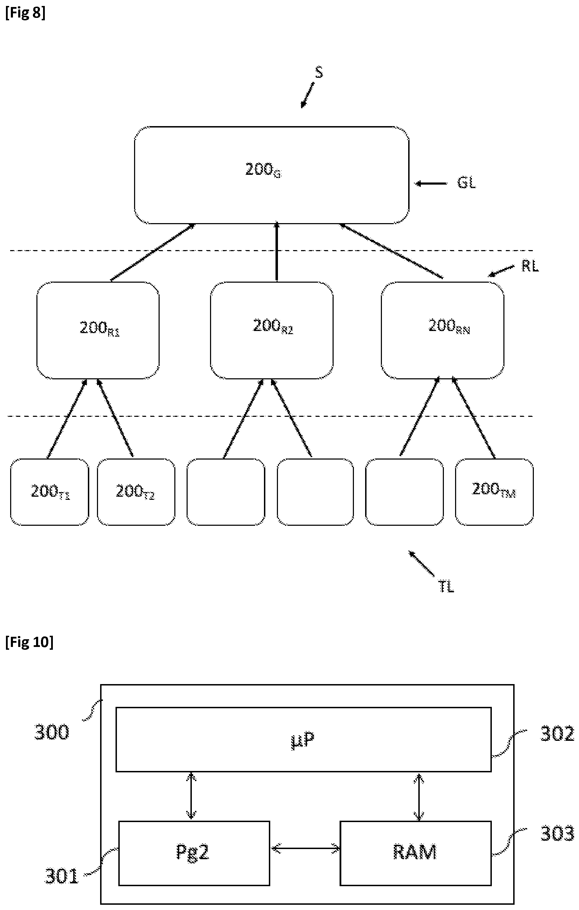

Le système de gestion d'anomalies dans un réseau de communication selon l'invention qui vient d'être présenté s'applique également à un réseau de communication RC conforme à une des générations précédentes 2G, 3G, 4G de la norme 3GPP, par exemple tel que spécifié dans le document TS 23002, intitulé « Digital cellular telecommunications system (Phase 2+) Universal Mobile Telecommunications System (UMTS); LTE; Network architecture (3GPP TS 23.002 version 12.5.0 Release 12) », publié par l'ETSI, en octobre 2014. Comme illustré par la **figure 8****,** un tel réseau est organisé selon une architecture hiérarchique composée de plusieurs niveaux. Ces niveaux hiérarchiques peuvent être définis par exemple selon des critères de proximité géographique ou bien par fonction de réseau ou encore par type de service. Le niveau le plus bas dans la hiérarchie, ici appelé niveau technique ou technologie TL, regroupe un ensemble d'équipements nœuds ayant une vue plus restreinte, que le niveau immédiatement supérieur, ici appelé niveau régional ou région RL, qui regroupe plusieurs technologies et a lui-même une vue plus restreinte que le niveau au-dessus de lui, ici le niveau le plus élevé, appelé niveau général GL qui regroupe plusieurs régions. Chaque niveau supérieur GL, RL est doté d'au moins un agent de détection d'anomalies qui renforce celui du niveau inférieur. Plus précisément, dans l'exemple envisagé sur la figure **8****,** le niveau général comprend un unique agent de détection d'anomalie 200G, qui renforce chacun des agents de détection d'anomalies 200_{R1}-200_{RM} de chacune des M régions, avec M entier supérieur ou égal à 2, du niveau immédiatement inférieur RL. Ensuite, chacun des agents 200_{R1}-200_{RM} renforce les agents de détection d'anomalies 200_{T1}-200_{TN} du niveau inférieur (TL) auxquels il est associé, avec N entier supérieur ou égal à 2. Dans l'exemple de la figure **8****,** l'agent 200_{R1} est configuré pour renforcer les agents 200_{T1} et 200_{T2}, qui lui soumettent leurs demandes de validation. Au sein d'un même niveau et en interne de chaque agent, le modèle de prédiction du module de détection d'anomalies commun 110 de chaque agent est en outre renforcé par les prédictions des modèles de ses modules de détection spécifiques 120 d'attaques et 130 de défaillances. Ces derniers communiquent avec les modules de détection spécifiques des agents voisins au sein du même niveau hiérarchique pour les informer chaque fois qu'ils ont détecté une anomalie.et ainsi se renforcent mutuellement. Lorsqu'une anomalie est détectée à un niveau supérieur, une action de traitement peut être déclenchée soit par un dispositif actionneur de ce niveau supérieur, soit par délégation, par un ou plusieurs dispositifs actionneurs du ou des niveaux inférieurs, selon la catégorie d'attaques et/ou de défaillances détectée.

Lorsqu'une anomalie est détectée par un agent d'un niveau inférieur, il notifie l'agent du niveau supérieur dont il dépend pour lui demander de valider sa détection.

Plus précisément, le niveau inférieur (niveau TL) a la vue la plus restreinte, au sens où les données de mesures qu'il collecte sont locales à la technologie. Ce niveau se concentre sur l'apprentissage des modèles de prédiction d'anomalies de chaque agent de chaque technologie rattachée à une région, de manière distribuée. Par exemple, les vecteurs de données de mesures sont étiquetés avec une catégorie binaire (comportement normal : 0, problème : 1). Une technique d'apprentissage binaire rapide et légère est mise en œuvre par chaque agent 200_{Tn} afin d'apprendre le comportement de chaque technologie pour chaque région.

Le deuxième niveau (RL) a une vue plus générale au sens où il reçoit des données de mesures de sa région, par le mécanisme de validation des technologies qui dépendent de cette région et par le mécanisme d'information aux voisins, des régions voisines. L'apprentissage dans ce niveau est réalisé par région de manière distribuée. L'apprentissage est réalisé par plusieurs modèles qui correspondent aux modèles de prédiction de chacun des agents de région 100R₁-100_{RM} et s'appuie sur les données collectées dans sa région d'appartenance.

Le niveau le plus élevé (GL) a une vision globale du réseau au sens où il reçoit des données de mesures qui remontent de toutes les régions du niveau inférieur par le mécanisme de validation. Avantageusement, son agent 200_{G} est un dispositif de coordination selon l'invention. A ce niveau, l'apprentissage est réalisé sur des données qui couvrent toutes les technologies de toutes les régions sur une grande période. La formation est réalisée à l'aide d'un modèle de prédiction robuste de type réseau de neurones profond DNN (pour « Deep Neural Net », en anglais) ou d'apprentissage renforcé pour « Deep Reinforcement Learning », en anglais).

On présente maintenant, en relation avec la **figure 9****,** un autre exemple de structure matérielle d'un dispositif 100 de détection d'anomalies selon l'invention que celui des **figures 2A** **et** **2B****.**

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir des vecteurs de données de mesures obtenues, les catégories d'anomalies prédites pour ces vecteurs, la catégorie d'attaque respectivement de défaillance corrective transmise en interne par le ou les modules de détection spécifiques ou en externe par le dispositif de coordination 300. Optionnellement, elle stocke aussi la valeur de récompense/pénalité reçue.

La **figure 9** illustre seulement une manière particulière, parmi plusieurs possibles, de réaliser le dispositif 100 afin qu'il effectue les étapes du procédé de détection d'anomalies dans un réseau de communication tel que détaillé ci-dessus, en relation avec les figures **3** **et** **4** dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré à un équipement nœud ou routeur 10 connecté au réseau de télécommunications RT, mais il peut aussi être intégré à une fonction de réseau virtuelle VNF mise en œuvre dans le réseau de communications RC et hébergée par un équipement nœud de ce réseau.

Selon la variante de réalisation de l'invention illustrée par la **figure 2A****,** le dispositif 100 s'appuie sur la structure matérielle de l'équipement nœud 10, qui a dans cet exemple la structure matérielle d'un ordinateur et comprend plus particulièrement un processeur, une mémoire vive, une mémoire morte, une mémoire flash non volatile ainsi que des moyens de communication qui lui permettent de communiquer avec d'autres équipements, via le réseau de communication. La mémoire morte constitue un support d'enregistrement conforme à l'invention, lisible par le processeur et sur lequel est enregistré le programme d'ordinateur Pg1 conforme à l'invention, comportant des instructions pour l'exécution du procédé de détection d'anomalies selon l'invention.

On présente enfin, en relation avec la **figure 10****,** un exemple de structure matérielle d'un dispositif 300 de coordination de détections d'anomalies selon l'invention, comprenant, comme illustré par l'exemple de la **figure 5****,** au moins un module 310 de détection d'anomalies, un module 320 de validation de détections d'anomalies et un module 330 de décision d'une action de traitement d'une anomalie validée auprès d'un ou plusieurs dispositifs actionneurs.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 300 comprend une mémoire vive 303 (par exemple une mémoire RAM), une unité de traitement 302 équipée par exemple d'un processeur, et pilotée par un programme d'ordinateur Pg2, représentatif des modules de détection, validation et décision, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 peut aussi contenir les catégories d'anomalies détectées par le module 310, les récompenses/pénalités précédemment attribuées à un dispositif de détection d'anomalie 100 etc. La **figure 10** illustre seulement une manière particulière, parmi plusieurs possibles, de réaliser le dispositif 300 afin qu'il effectue les étapes du procédé de coordination de détection d'anomalies tel que détaillé ci-dessus, en relation avec la figure **6** dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 300 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 300 intégré dans un équipement nœud 30 du réseau de télécommunications RT, mais il peut aussi être intégré dans une fonction de réseau virtuelle VNF exploitant les ressources physiques d'un équipement nœud du réseau.

L'invention qui vient d'être décrite dans ses différents modes de réalisation présente de nombreux avantages. En particulier, le nouveau système de gestion d'anomalies proposé par l'invention, permet une détection et une surveillance mutualisées des attaques et des défaillances du réseau, de bout en bout, quelle que soit l'architecture du réseau de communications.

## Revendications

1. Procédé de détection d'anomalies dans un réseau de télécommunications, susceptibles d'affecter un élément dit cible (EH) du réseau, le procédé comportant, , au niveau d'un premier module de détection d'anomalies :
- l'obtention (30) d'une pluralité de premières données de mesures représentatives d'une utilisation de ressources dudit réseau à un instant donné au niveau dudit élément cible ;
- la détermination (31) à partir de la pluralité de premières données de mesures, d'au moins une catégorie d'anomalies parmi une pluralité de catégories d'anomalies comprenant au moins une catégorie représentative d'une présence d'attaque, une catégorie représentative d'une présence d'une défaillance et une catégorie représentative d'une absence d'anomalie;
- la demande (32) de validation de la catégorie d'anomalies déterminée à un deuxième module de détection d'attaques et/ou à un troisième module de détection de défaillances, en fonction de la catégorie d'anomalies déterminée, ladite demande comprenant au moins l'instant donné, un identifiant de l'élément cible, la catégorie d'anomalies déterminée et la pluralité de premières données de mesures;
- sur réception d'au moins une réponse de la part du deuxième et/ou troisième module, la décision (33) en fonction de la réponse reçue d'une action de traitement à déclencher dans le réseau.

2. Procédé de détection d'anomalies d'un réseau de télécommunications selon la revendication précédente, **caractérisé en ce qu'**il met en œuvre :
au niveau du deuxième module de détection d'attaques :
- l'obtention (40) d'une pluralité de deuxièmes données de mesures caractéristiques d'une attaque et représentatives d'une utilisation de ressources dudit réseau audit instant donné au niveau dudit élément cible;
- la détermination (41) à partir de la pluralité de deuxièmes données de mesures, d'une catégorie d'attaques, parmi une pluralité de catégorie d'attaques comprenant au moins une catégorie représentative d'un type d'attaque et une catégorie représentative d'une absence d'attaque;
- la réponse (44) à la demande de validation du premier module, comprenant au moins la catégorie d'attaques déterminée par le deuxième module, dite catégorie d'attaques validée;
au niveau du troisième module de détection de défaillances :
- l'obtention (40) d'une pluralité de troisième données de mesures caractéristiques d'une défaillance réseau et représentatives d'une utilisation de ressources dudit réseau audit instant donné au niveau dudit élément cible;
la détermination (41) à partir de la pluralité de troisièmes données de mesures, d'une catégorie de défaillances, parmi une pluralité de catégorie de défaillances comprenant au moins une catégorie représentative d'un type de défaillance et une catégorie représentative d'une absence de défaillance; et
- la réponse (44) à la demande de validation du premier module comprenant au moins la catégorie de défaillances déterminée par le troisième module, dite catégorie de défaillances validée.

3. Procédé de détection d'anomalies dans un réseau de télécommunications selon la revendication précédente, **caractérisé en ce que** la détermination d'une catégorie d'anomalies comprend au moins une prédiction de ladite au moins une catégorie d'anomalies par un premier modèle de classification **et en ce que le procédé** met en œuvre, sur réception de la ou les réponses de validation du deuxième et/ou du troisième module, une mise à jour (34) d'un premier ensemble d'apprentissage pour entraîner le premier modèle de classification utilisé par le premier module pour la prédiction de ladite au moins une catégorie d'anomalies, avec la pluralité de premières données de mesures associée à la catégorie d'attaques et/ou de défaillances validée reçue dans la ou les réponses de validation et un déclenchement d'une phase d'apprentissage du premier modèle de classification à l'aide du premier ensemble d'apprentissage mis à jour.

4. Procédé de détection d'anomalies dans un réseau de télécommunications selon la revendication précédente, **caractérisé en ce que** ladite au moins une dite réponse de validation reçue comprend en outre une première récompense valorisée en fonction d'une correspondance de la catégorie d'attaques, respectivement de défaillances, validée avec la catégorie d'anomalies prédite par le premier module, ladite première récompense étant valorisée à une valeur positive en cas de correspondance, et à une valeur négative en cas de non correspondance; et **en ce que**
la phase d'apprentissage du premier modèle de classification est déclenchée à une échéance temporelle fonction de la valeur de la première récompense reçue.

5. Procédé de détection d'anomalies selon l'une des revendications **2 à 4, caractérisé en ce que,** suite à la validation de la catégorie d'anomalies déterminée par le premier module, un message d'information est transmis (45) par le deuxième, respectivement le troisième module à un dispositif de détection d'anomalies voisin dans le réseau de communication, ledit message d'information comprenant au moins l'instant donné, l'identifiant de l'élément cible, la catégorie d'attaques, respectivement de défaillances, validée et la pluralité de deuxièmes, respectivement troisièmes, données de mesures associées.

6. Procédé de détection d'anomalies selon l'une quelconque des revendications **2 à 5, caractérisé en ce qu'**il met en œuvre une réception d'un message d'information en provenance d'un dispositif de détection d'anomalies voisin dans le réseau de communication, ledit message comprenant au moins un instant donné, un identifiant d'un élément cible, une pluralité de deuxièmes, respectivement troisièmes, données de mesures associées à l'instant donné et une classe d'attaques, respectivement de défaillances, détectée au niveau de l'élément cible, une mise à jour d'un deuxième, respectivement troisième, ensemble d'apprentissage utilisé pour entraîner un deuxième, respectivement troisième, modèle de classification utilisé par le deuxième, respectivement, troisième module de détection à l'aide des informations reçues et un déclenchement d'une phase d'apprentissage du deuxième, respectivement troisième, modèle de classification à l'aide du deuxième, respectivement troisième, ensemble d'apprentissage mis à jour.

7. Procédé de détection d'anomalies selon l'une quelconque des revendications précédentes, **caractérisé en ce qu'**il met en œuvre :
au niveau du deuxième, respectivement du troisième, module :
la transmission à un dispositif de coordination de la détection d'anomalies (300, 200_{G}) du réseau d'une demande de validation externe (DVE) comprenant au moins la catégorie d'attaques, respectivement de défaillances, détectée, la pluralité de deuxièmes,
respectivement troisièmes, données de mesures associées, l'identifiant de l'élément cible et l'instant donné ; et
la réception d'une réponse de validation externe comprenant au moins une catégorie d'attaques, respectivement de défaillances, validée par ledit dispositif de coordination de la détection d'anomalies, ladite catégorie d'attaques, respectivement de défaillances, validée étant la catégorie d'attaques, respectivement de défaillances, transmise s'il y a correspondance entre la catégorie d'attaques, respectivement de défaillances, détectée par le dispositif de coordination et la catégorie d'attaques, respectivement de défaillances, reçue, et la catégorie d'attaques, respectivement de défaillances, détectée par le dispositif de coordination sinon.

8. Procédé de détection d'anomalies selon la revendication **7, caractérisé en ce que** la réponse de validation externe reçue comprend en outre une deuxième récompense valorisée à une valeur positive si la catégorie d'attaques, respectivement de défaillances détectée correspond à la catégorie d'attaques, respectivement de défaillances, détectée par le dispositif de coordination et à une valeur négative sinon et
la mise à jour du deuxième, respectivement troisième, ensemble de données d'apprentissage par ajout de la pluralité de deuxièmes, respectivement troisièmes, données de mesures associées à la catégorie d'attaques, respectivement de défaillances validée par le dispositif de coordination.

9. Dispositif (100, 100i) de détection d'anomalies dans un réseau de télécommunications, comprenant un premier module de prédiction d'anomalies, un deuxième module de prédiction d'attaques et un troisième module de prédiction de défaillances et en ce que le premier module est configuré pour :
- obtenir une pluralité de premières données de mesures représentatives d'une utilisation de ressources dudit réseau à un instant donné au niveau dudit élément cible ;
- déterminer à partir de la pluralité de premières données de mesures, d'au moins une catégorie d'anomalies parmi une pluralité de catégories d'anomalies comprenant au moins une catégorie représentative d'une présence d'attaque, une catégorie représentative d'une présence d'une défaillance et une catégorie représentative d'une absence d'anomalie;
- demander une validation de la catégorie d'anomalies déterminée à un deuxième module de détection d'attaques et/ou à un troisième module de détection de défaillances, en fonction de la catégorie d'anomalies déterminée, ladite demande comprenant au moins l'instant donné, un identifiant de l'élément cible, la catégorie d'anomalies déterminée et la pluralité de premières données de mesures; et
- sur réception d'au moins une réponse de la part du deuxième et/ou troisième module, décider en fonction de la réponse reçue d'une action de traitement de l'anomalie à déclencher dans le réseau.

10. Equipement routeur (10) d'un réseau de télécommunications, **caractérisé en ce qu'il** comprend un dispositif de détection d'anomalies (100) selon la revendication **9** et un dispositif de coordination de la détection d'anomalies configuré pour :
- recevoir, en provenance dudit au moins un dispositif (100) de détection d'anomalies, une demande de validation externe comprenant au moins une catégorie d'attaques, respectivement de défaillances, détectée par ledit dispositif de détection d'anomalies (100), une pluralité de données de mesures caractéristiques d'une attaque, respectivement d'une défaillance et représentatives d'une utilisation de ressources du réseau à un instant donné au niveau d'un élément cible dudit réseau;
- valider ladite au moins une catégorie d'attaques, respectivement de défaillances, détectée par ledit dispositif de détection d'anomalies (100), dite catégorie d'attaques, respectivement de défaillances reçue, par comparaison de la catégorie d'attaques, respectivement de défaillances reçue avec au moins une catégorie d'attaques, respectivement de défaillances, détectée par ledit dispositif de coordination audit instant donné et au niveau dudit élément cible ;
- transmettre à destination du dispositif de détection d'anomalies (100) une réponse de validation externe comprenant au moins une catégorie d'attaques, respectivement de défaillances, validée par ledit dispositif de coordination, ladite catégorie d'attaques, respectivement de défaillances, validée étant la catégorie d'attaques, respectivement de défaillances, reçue s'il y a correspondance entre la catégorie d'attaques, respectivement de défaillances, détectée par le dispositif de coordination et la catégorie d'attaques, respectivement de défaillances, reçue, et la catégorie d'attaques, respectivement de défaillances, détectée par le dispositif de coordination sinon.

11. Système (S) de gestion d'anomalies dans un réseau de télécommunications, **caractérisé en ce qu'il** comprend au moins un dispositif (100) de détection d'anomalies selon la revendication 9 et au moins un dispositif (300) de coordination de la détection d'anomalies configuré pour :
- recevoir, en provenance dudit au moins un dispositif (100) de détection d'anomalies, une demande de validation externe comprenant au moins une catégorie d'attaques, respectivement de défaillances, détectée par ledit dispositif de détection d'anomalies (100), une pluralité de données de mesures caractéristiques d'une attaque, respectivement d'une défaillance et représentatives d'une utilisation de ressources du réseau à un instant donné au niveau d'un élément cible dudit réseau;
- valider ladite au moins une catégorie d'attaques, respectivement de défaillances, détectée par ledit dispositif de détection d'anomalies (100), dite catégorie d'attaques, respectivement de défaillances reçue, par comparaison de la catégorie d'attaques, respectivement de défaillances reçue avec au moins une catégorie d'attaques, respectivement de défaillances, détectée par ledit dispositif de coordination audit instant donné et au niveau dudit élément cible ;
- transmettre à destination du dispositif de détection d'anomalies (100) une réponse de validation externe comprenant au moins une catégorie d'attaques, respectivement de défaillances, validée par ledit dispositif de coordination, ladite catégorie d'attaques, respectivement de défaillances, validée étant la catégorie d'attaques, respectivement de défaillances, reçue s'il y a correspondance entre la catégorie d'attaques, respectivement de défaillances, détectée par le dispositif de coordination et la catégorie d'attaques, respectivement de défaillances, reçue, et la catégorie d'attaques, respectivement de défaillances, détectée par le dispositif de coordination sinon.

12. Système de gestion d'anomalies selon la revendication 11, **caractérisé en ce que** ladite réponse comprend en outre une récompense valorisée à une valeur positive si la catégorie reçue d'attaques, respectivement de défaillances, correspond à la catégorie d'attaques, respectivement de défaillances, détectée par le dispositif de coordination et à une valeur négative sinon.

13. Système de gestion d'anomalies selon la revendication 11 ou la revendication 12, **caractérisé en ce que** la réponse comprend en outre un type de données de mesures à ajouter à ladite pluralité de données de mesures collectées par le dispositif de détection d'anomalies.

14. Système de gestion d'anomalies selon l'une quelconque des revendications 11 à 13, **caractérisé en ce que** ledit réseau comprend au moins une tranche comprenant un dit dispositif de coordination, ladite tranche étant configurée pour soutenir un service de communication pour un client donné et comprenant au moins deux sous-tranches gérées par des entités administratives distinctes, chaque sous-tranche comprenant au moins un élément cible et un dit dispositif de détection d'anomalies configuré pour détecter des anomalies au niveau dudit au moins un élément cible de ladite sous-tranche.

15. Produit programme d'ordinateur comprenant des instructions de code de programme pour la mise en œuvre d'un procédé selon l'une quelconque des revendications **1 à 8,** lorsqu'il est exécuté par un processeur.

## Patentansprüche

1. Verfahren zur Detektion von Anomalien in einem Telekommunikationsnetzwerk, die ein sogenanntes Zielelement (EH) des Netzwerks beeinflussen können, wobei das Verfahren auf Ebene eines ersten Moduls zur Detektion von Anomalien Folgendes umfasst:
- das Erhalten (30) einer Mehrzahl von ersten Messdaten, die für eine Verwendung von Ressourcen des Netzwerks zu einem gegebenen Zeitpunkt auf Ebene des Zielelements repräsentativ sind;
- das Bestimmen (31), ausgehend von der Mehrzahl von ersten Messdaten, mindestens einer Anomalienkategorie unter einer Mehrzahl von Anomalienkategorien, die mindestens eine für ein Vorliegen eines Angriffs repräsentative Kategorie, eine für ein Vorliegen eines Fehlers repräsentative Kategorie und eine für ein Nichtvorliegen einer Anomalie repräsentative Kategorie umfassen;
- das Anfordern (32) einer Validierung der bestimmten Anomalienkategorie bei einem zweiten Modul zur Angriffsdetektion und/oder bei einem dritten Modul zur Fehlerdetektion in Abhängigkeit von der bestimmten Anomalienkategorie, wobei die Anforderung mindestens den gegebenen Zeitpunkt, eine Kennung des Zielelements, die bestimmte Anomalienkategorie und die Mehrzahl von ersten Messdaten umfasst;
- beim Empfangen mindestens einer Antwort seitens des zweiten und/oder dritten Moduls, das Entscheiden (33) über eine in dem Netzwerk auszulösende Verarbeitungsaktion in Abhängigkeit von der empfangenen Antwort.

2. Verfahren zur Detektion von Anomalien eines Telekommunikationsnetzwerks nach dem vorhergehenden Anspruch, **dadurch gekennzeichnet, dass** es Folgendes durchführt:
auf Ebene des zweiten Moduls zur Angriffsdetektion:
- das Erhalten (40) einer Mehrzahl von zweiten Messdaten, die für einen Angriff charakteristisch sind und für eine Verwendung von Ressourcen des Netzwerks zu dem gegebenen Zeitpunkt auf Ebene des Zielelements repräsentativ sind;
- das Bestimmen (41), ausgehend von der Mehrzahl von zweiten Messdaten, einer Angriffskategorie unter einer Mehrzahl von Angriffskategorien, die mindestens eine für einen Angriffstyp repräsentative Kategorie und eine für ein Nichtvorliegen eines Angriffs repräsentative Kategorie umfassen;
- die Antwort (44) auf die Anforderung zur Validierung des ersten Moduls, die mindestens die von dem zweiten Modul bestimmte Angriffskategorie, die als validierte Angriffskategorie bezeichnet wird, umfasst;
auf Ebene des dritten Moduls zur Fehlerdetektion:
- das Erhalten (40) einer Mehrzahl von dritten Messdaten, die für einen Netzwerkfehler charakteristisch sind und für eine Verwendung von Ressourcen des Netzwerks zu dem gegebenen Zeitpunkt auf Ebene des Zielelements repräsentativ sind;
das Bestimmen (41), ausgehend von der Mehrzahl von dritten Messdaten, einer Fehlerkategorie unter einer Mehrzahl von Fehlerkategorien, die mindestens eine für einen Fehlertyp repräsentative Kategorie und eine für ein Nichtvorliegen eines Fehlers repräsentative Kategorie umfassen; und
- die Antwort (44) auf die Anforderung zur Validierung des ersten Moduls, die mindestens die von dem dritten Modul bestimmte Fehlerkategorie, die als validierte Angriffskategorie bezeichnet wird, umfasst.

3. Verfahren zur Detektion von Anomalien in einem Telekommunikationsnetzwerk nach dem vorhergehenden Anspruch, **dadurch gekennzeichnet, dass** das Bestimmen einer Anomalienkategorie mindestens eine Vorhersage der mindestens einen Anomalienkategorie durch ein erstes Klassifizierungsmodell umfasst und dass das Verfahren, beim Empfangen der Antwort oder Antworten zur Validierung des zweiten und/oder dritten Moduls, eine Aktualisierung (34) eines ersten Lernsatzes, um das von dem ersten Modul zur Vorhersage der mindestens einen Anomalienkategorie verwendete erste Klassifizierungsmodell mit der Mehrzahl von ersten Messdaten zu trainieren, die der in der Antwort oder den Antworten zur Validierung empfangenen validierten Angriffs- und/oder Fehlerkategorie zugeordnet ist, und ein Auslösen einer Lernphase des ersten Klassifizierungsmodells mithilfe des aktualisierten ersten Lernsatzes durchführt.

4. Verfahren zur Detektion von Anomalien in einem Telekommunikationsnetzwerk nach dem vorhergehenden Anspruch, **dadurch gekennzeichnet, dass** die mindestens eine empfangene Antwort zur Validierung ferner eine erste Belohnung umfasst, die in Abhängigkeit von einer Übereinstimmung der validierten Angriffs- bzw. Fehlerkategorie mit der von dem ersten Modul vorhergesagten Anomalienkategorie bewertet wird, wobei die erste Belohnung im Fall einer Übereinstimmung mit einem positiven Wert bewertet und im Fall einer Nichtübereinstimmung mit einem negativen Wert wird; und dass
die Lernphase des ersten Klassifizierungsmodells bei einer zeitlichen Fälligkeit ausgelöst wird, die vom Wert der empfangenen ersten Belohnung abhängt.

5. Verfahren zur Detektion von Anomalien nach einem der Ansprüche 2 bis 4, **dadurch gekennzeichnet, dass** nach der Validierung der von dem ersten Modul bestimmten Anomalienkategorie eine Informationsnachricht von dem zweiten bzw. dritten Modul an eine benachbarte Vorrichtung zur Detektion von Anomalien in dem Kommunikationsnetz übertragen (45) wird, wobei die Informationsnachricht mindestens den gegebenen Zeitpunkt, die Kennung des Zielelements, die validierte Angriffs- bzw. Fehlerkategorie und die Mehrzahl von zweiten bzw. dritten zugeordneten Messdaten umfasst.

6. Verfahren zur Detektion von Anomalien nach einem der Ansprüche 2 bis 5, **dadurch gekennzeichnet, dass** es ein Empfangen einer von einer benachbarten Vorrichtung zur Detektion von Anomalien in dem Kommunikationsnetzwerk stammenden Informationsnachricht, wobei die Nachricht mindestens einen gegebenen Zeitpunkt, eine Kennung eines Zielelements, eine Mehrzahl von zweiten bzw. dritten Messdaten, die dem gegebenen Zeitpunkt zugeordnet sind, und eine auf Ebene des Zielelements detektierte Angriffs- bzw. Fehlerklasse umfasst, eine Aktualisierung eines zweiten bzw. dritten Lernsatzes, der verwendet wird, um ein zweites bzw. drittes Klassifizierungsmodell, das von dem zweiten bzw. dritten Modul zur Detektion verwendet wird, mithilfe der empfangenen Informationen zu trainieren, und ein Auslösen einer Lernphase des zweiten bzw. dritten Klassifizierungsmodells mithilfe des zweiten bzw. dritten aktualisierten Lernsatzes durchführt.

7. Verfahren zur Detektion von Anomalien nach einem der vorhergehenden Ansprüche, **dadurch gekennzeichnet, dass** es Folgendes durchführt:
auf Ebene des zweiten bzw. dritten Moduls:
das Übertragen einer Anforderung zur externen Validierung (DVE), die mindestens die detektierte Angriffs- bzw. Fehlerkategorie, die Mehrzahl von zweiten bzw. dritten zugeordneten Messdaten, die Kennung des Zielelements und den gegebenen Zeitpunkt umfasst, an eine Vorrichtung zur Koordination der Detektion von Anomalien (300, 200_{G}) des Netzwerks; und
das Empfangen einer externen Validierungsantwort, die mindestens eine von der Vorrichtung zur Koordination der Detektion von Anomalien validierte Angriffs- bzw. Fehlerkategorie umfasst, wobei die validierte Angriffs- bzw. Fehlerkategorie die übertragene Angriffs- bzw. Fehlerkategorie ist, wenn eine Übereinstimmung zwischen der von der Vorrichtung zur Koordination detektierten Angriffs- bzw. Fehlerkategorie und der empfangenen Angriffs- bzw. Fehlerkategorie vorliegt, und ansonsten die von der Vorrichtung zur Koordination detektierte Angriffs- bzw. Fehlerkategorie ist.

8. Verfahren zur Detektion von Anomalien nach Anspruch 7, **dadurch gekennzeichnet, dass** die empfangene externe Validierungsantwort ferner eine zweite Belohnung umfasst, die mit einem positiven Wert bewertet wird, wenn die detektierte Angriffs- bzw. Fehlerkategorie mit der von der Vorrichtung zur Koordination detektierten Angriffs- bzw. Fehlerkategorie übereinstimmt, und ansonsten mit einem negativen Wert, und
die Aktualisierung des zweiten bzw. dritten Lernsatzes durch Hinzufügen der Mehrzahl von zweiten bzw. dritten Messdaten, die der von der Vorrichtung zur Koordination validierten Angriffs- bzw. Fehlerkategorie zugeordnet sind.

9. Vorrichtung (100, 100i) zur Detektion von Anomalien in einem Telekommunikationsnetzwerk, umfassend ein erstes Modul zur Vorhersage von Anomalien, ein zweites Modul zur Vorhersage von Angriffen und ein drittes Modul zur Vorhersage von Fehlern, wobei das erste Modul ausgelegt ist zum:
- Erhalten einer Mehrzahl von ersten Messdaten, die für eine Verwendung von Ressourcen des Netzwerks zu einem gegebenen Zeitpunkt auf Ebene des Zielelements repräsentativ sind;
- Bestimmen, ausgehend von der Mehrzahl von ersten Messdaten, mindestens einer Anomalienkategorie unter einer Mehrzahl von Anomalienkategorien, die mindestens eine für ein Vorliegen eines Angriffs repräsentative Kategorie, eine für ein Vorliegen eines Fehlers repräsentative Kategorie und eine für ein Nichtvorliegen einer Anomalie repräsentative Kategorie umfassen;
- Anfordern einer Validierung der bestimmten Anomalienkategorie bei einem zweiten Modul zur Angriffsdetektion und/oder bei einem dritten Modul zur Fehlerdetektion in Abhängigkeit von der bestimmten Anomalienkategorie, wobei die Anforderung mindestens den gegebenen Zeitpunkt, eine Kennung des Zielelements, die bestimmte Anomalienkategorie und die Mehrzahl von ersten Messdaten umfasst; und
- beim Empfangen mindestens einer Antwort seitens des zweiten und/oder dritten Moduls, das Entscheiden über eine in dem Netzwerk auszulösende Aktion zur Verarbeitung der Anomalie in Abhängigkeit von der empfangenen Antwort.

10. Routereinrichtung (10) eines Telekommunikationsnetzwerks, **dadurch gekennzeichnet, dass** sie eine Vorrichtung (100) zur Detektion von Anomalien nach Anspruch 9 umfasst und eine Vorrichtung zur Koordination der Detektion von Anomalien, die dazu ausgelegt ist:
- von der mindestens einen Vorrichtung (100) zur Detektion von Anomalien eine Anforderung zur externen Validierung zu empfangen, die mindestens eine von der Vorrichtung (100) zur Detektion von Anomalien detektierte Angriffs- bzw. Fehlerkategorie, eine Mehrzahl von Messdaten, die für einen Angriff bzw. einen Fehler charakteristisch sind und für eine Verwendung von Ressourcen des Netzwerks zu einem gegebenen Zeitpunkt auf Ebene eines Zielelements des Netzwerks repräsentativ sind, umfasst;
- die mindestens eine von der Vorrichtung (100) zur Detektion von Anomalien detektierte Angriffs- bzw. Fehlerkategorie, die als die empfangene Angriffs- bzw. Fehlerkategorie bezeichnet wird, durch Vergleichen der empfangenen Angriffs- bzw. Fehlerkategorie mit mindestens einer von der Vorrichtung zur Koordination zu dem gegebenen Zeitpunkt und auf Ebene des Zielelements detektierten Angriffs- bzw. Fehlerkategorie zu validieren;
- an die Vorrichtung (100) zur Detektion von Anomalien eine externe Validierungsantwort zu übertragen, die mindestens eine Angriffs- bzw. Fehlerkategorie, die von der Vorrichtung zur Koordination validiert wurde, umfasst, wobei die validierte Angriffs- bzw. Fehlerkategorie die empfangene Angriffs- oder Fehlerkategorie ist, wenn eine Übereinstimmung zwischen der von der Vorrichtung zur Koordination detektierten Angriffs- bzw. Fehlerkategorie und der empfangenen Angriffs- bzw. Fehlerkategorie vorliegt, und ansonsten die von der Vorrichtung zur Koordination detektierte Angriffs- bzw. Fehlerkategorie ist.

11. System (S) zur Verwaltung von Anomalien in einem Telekommunikationsnetzwerk, **dadurch gekennzeichnet, dass** es mindestens eine Vorrichtung (100) zur Detektion von Anomalien nach Anspruch 9 umfasst und mindestens eine Vorrichtung (300) zur Koordination der Detektion von Anomalien, die dazu ausgelegt ist:
- von der mindestens einen Vorrichtung (100) zur Detektion von Anomalien eine Anforderung zur externen Validierung zu empfangen, die mindestens eine von der Vorrichtung (100) zur Detektion von Anomalien detektierte Angriffs- bzw. Fehlerkategorie, eine Mehrzahl von Messdaten, die für einen Angriff bzw. einen Fehler charakteristisch sind und für eine Verwendung von Ressourcen des Netzwerks zu einem gegebenen Zeitpunkt auf Ebene eines Zielelements des Netzwerks repräsentativ sind, umfasst;
- die mindestens eine von der Vorrichtung (100) zur Detektion von Anomalien detektierte Angriffs- bzw. Fehlerkategorie, die als die empfangene Angriffs- bzw. Fehlerkategorie bezeichnet wird, durch Vergleichen der empfangenen Angriffs- bzw. Fehlerkategorie mit mindestens einer von der Vorrichtung zur Koordination zu dem gegebenen Zeitpunkt und auf Ebene des Zielelements detektierten Angriffs- bzw. Fehlerkategorie zu validieren;
- an die Vorrichtung (100) zur Detektion von Anomalien eine externe Validierungsantwort zu übertragen, die mindestens eine Angriffs- bzw. Fehlerkategorie, die von der Vorrichtung zur Koordination validiert wurde, umfasst, wobei die validierte Angriffs- bzw. Fehlerkategorie die empfangene Angriffs- oder Fehlerkategorie ist, wenn eine Übereinstimmung zwischen der von der Vorrichtung zur Koordination detektierten Angriffs- bzw. Fehlerkategorie und der empfangenen Angriffs- bzw. Fehlerkategorie vorliegt, und ansonsten die von der Vorrichtung zur Koordination detektierte Angriffs- bzw. Fehlerkategorie ist.

12. System zur Verwaltung von Anomalien nach Anspruch 11, **dadurch gekennzeichnet, dass** die Antwort ferner eine Belohnung umfasst, die mit einem positiven Wert bewertet wird, wenn die empfangene Angriffs- bzw. Fehlerkategorie mit der von der Vorrichtung zur Koordination detektierten Angriffs- bzw. Fehlerkategorie übereinstimmt, und ansonsten mit einem negativen Wert.

13. System zur Verwaltung von Anomalien nach Anspruch 11 oder Anspruch 12, **dadurch gekennzeichnet, dass** die Antwort ferner einen Messdatentyp umfasst, der zu der von der Vorrichtung zur Detektion von Anomalien erfassten Mehrzahl von Messdaten hinzuzufügen ist.

14. System zur Verwaltung von Anomalien nach einem der Ansprüche 11 bis 13, **dadurch gekennzeichnet, dass** das Netzwerk mindestens einen Slice umfasst, der eine Vorrichtung zur Koordination umfasst, wobei der Slice dazu ausgelegt ist, einen Kommunikationsdienst für einen gegebenen Client zu unterstützen, und mindestens zwei Teil-Slices umfasst, die von verschiedenen administrativen Einheiten verwaltet werden, wobei jeder Teil-Slice mindestens ein Zielelement umfasst und eine Vorrichtung zur Detektion von Anomalien, die dazu ausgelegt ist, Anomalien auf Ebene des mindestens einen Zielelements des Teil-Slices zu detektieren.

15. Computerprogrammprodukt, das Programmcodeanweisungen umfasst, die bei seiner Ausführung durch einen Prozessor das Verfahren nach einem der Ansprüche 1 bis 8 durchführen.

## Claims

1. Method for detecting anomalies in a telecommunications network, which anomalies are liable to affect an element (EH) of the network called the target element, the method comprising, in an anomaly-detecting first module:
- obtaining (30) a plurality of first measurement data representative of a utilisation of resources of said network at a given time by said target element;
- determining (31) from the plurality of first measurement data, at least one anomaly category among a plurality of anomaly categories comprising at least a category representative of a presence of attack, a category representative of a presence of a fault, and a category representative of an absence of anomaly;
- making a request (32) for validation of the determined anomaly category to an attack-detecting second module and/or to a fault-detecting third module, depending on the determined anomaly category, said request comprising at least the given time, an identifier of the target element, the determined anomaly category, and the plurality of first measurement data;
- on receipt of at least one response from the second and/or third module, deciding (33), depending on the received response, on a processing action to be initiated in the network.

2. Method for detecting anomalies in a telecommunications network according to the preceding claim, **characterized in that** it involves:
in the attack-detecting second module:
- obtaining (40) a plurality of second measurement data characteristic of an attack and representative of a utilisation of resources of said network at said given time by said target element;
- determining (41) from the plurality of second measurement data, an attack category among a plurality of attack categories comprising at least a category representative of a type of attack, and a category representative of an absence of attack;
- responding (44) to the validation request of the first module, the response comprising at least the attack category determined by the second module, which is called the validated attack category; in the failure-detecting third module:
- obtaining (40) a plurality of third measurement data characteristic of a network failure and representative of a utilisation of resources of said network at said given time by said target element;
determining (41) from the plurality of third measurement data, a failure category among a plurality of failure categories comprising at least a category representative of a type of failure, and a category representative of an absence of failure; and
- responding (44) to the validation request of the first module, the response comprising at least the failure category determined by the third module, which is called the validated failure category.

3. Method for detecting anomalies in a telecommunications network according to the preceding claim, **characterized in that** determining an anomaly category comprises at least one prediction of said at least one anomaly category by a first classification model and **in that** the method, on receipt of the one or more validation responses from the second and/or third module, updates (34) a first training set employed to train the first classification model used by the first module to predict said at least one anomaly category, with the plurality of first measurement data associated with the validated attack and/or fault category received in the one or more validation responses and initiates a phase of training the first classification model using the updated first training set.

4. Method for detecting anomalies in a telecommunications network according to the preceding claim, **characterized in that** said at least one said received validation response further comprises a first reward set depending on whether the validated attack category or failure category matches the anomaly category predicted by the first module, said first reward being set to a positive value when there is a match, and to a negative value when there is not a match; and **in that** the phase of training the first classification model is initiated after an expiry time depending on the value of the first reward received.

5. Method for detecting anomalies according to any of Claims 2 to 4, **characterized in that**, following validation of the anomaly category determined by the first module, an informational message is transmitted (45) by the second or third module to a neighbouring anomaly-detecting device in the communication network, said informational message comprising at least the given time, the identifier of the target element, the validated attack or failure category, and the plurality of associated second or third measurement data, respectively.

6. Method for detecting anomalies according to any of Claims 2 to 5, **characterized in that** it involves receiving an informational message originating from a neighbouring anomaly-detecting device in the communication network, said message comprising at least a given time, an identifier of a target element, a plurality of second or third measurement data associated with the given time, and an attack or failure class detected at the target element, respectively, updating a second or third training set employed to train a second or third classification model used by the second or third detecting module with the received information, respectively, and initiating a phase of training the second or third classification model using the updated second or third training set, respectively.

7. Method for detecting anomalies according to any of the preceding claims, **characterized in that** it involves: in the second or third module:
transmitting, to a device (300, 200_{G}) for coordinating anomaly detection of the network, an external validation request (DVE) comprising at least the detected attack or failure category, the plurality of associated second or third measurement data, the identifier of the target element, and the given time, respectively; and
receiving an external validation response comprising at least one attack or failure category validated by said device for coordinating anomaly detection, said validated attack or failure category being the transmitted attack or failure category if there is a match between the attack or failure category detected by the coordinating device and the received attack or failure category, and the attack or failure category detected by the coordinating device otherwise, respectively.

8. Method for detecting anomalies according to Claim 7, **characterized in that** the received external validation response further comprises a second reward set to a positive value if the detected attack or failure category corresponds to the attack or failure category detected by the coordinating device and to a negative value otherwise, respectively, and
the second or third training data set being updated by adding the plurality of second or third measurement data associated with the attack or failure category validated by the coordinating device, respectively.

9. Device (100, 100i) for detecting anomalies in a telecommunications network, comprising an anomaly-predicting first module, an attack-predicting second module and a fault-predicting third module, and in that the first module is configured to:
- obtain a plurality of first measurement data representative of a utilisation of resources of said network at a given time by said target element;
- determine from the plurality of first measurement data, at least one anomaly category among a plurality of anomaly categories comprising at least a category representative of a presence of attack, a category representative of a presence of a fault, and a category representative of an absence of anomaly;
- make a request for a validation of the determined anomaly category to an attack-detecting second module and/or to a fault-detecting third module, depending on the determined anomaly category, said request comprising at least the given time, an identifier of the target element, the determined anomaly category, and the plurality of first measurement data; and
- on receipt of at least one response from the second and/or third module, decide, depending on the received response, on an anomaly-processing action to be initiated in the network.

10. Router equipment (10) for a telecommunications network, **characterized in that** it comprises an anomaly-detecting device (100) according to Claim 9 and a device for coordinating anomaly detection configured to:
- receive, from said at least one anomaly-detecting device (100), an external validation request comprising at least one attack or failure category detected by said anomaly-detecting device (100), and a plurality of measurement data characteristic of an attack or failure and representative of a utilization of resources of the network at a given time by a target element of said network, respectively;
- validate said at least one attack or failure category detected by said anomaly-detecting device (100), which is called the received attack or failure category, by comparing the received attack or failure category with at least one attack or failure category detected by said coordinating device at said given time and at said target element, respectively;
- transmit to the anomaly-detecting device (100) an external validation response comprising at least one attack or failure category validated by said coordinating device, said validated attack or failure category being the received attack or failure category if there is a match between the attack or failure category detected by the coordinating device and the received attack or failure category, and the attack or failure category detected by the coordinating device otherwise, respectively.

11. System (S) for managing anomalies in a telecommunications network, **characterized in that** it comprises at least one anomaly-detecting device (100) according to Claim 9 and at least one device (300) for coordinating anomaly detection configured to:
- receive, from said at least one anomaly-detecting device (100), an external validation request comprising at least one attack or failure category detected by said anomaly-detecting device (100), and a plurality of measurement data characteristic of an attack or failure and representative of a utilization of resources of the network at a given time by a target element of said network, respectively;
- validate said at least one attack or failure category detected by said anomaly-detecting device (100), which is called the received attack or failure category, by comparing the received attack or failure category with at least one attack or failure category detected by said coordinating device at said given time and at said target element, respectively;
- transmit to the anomaly-detecting device (100) an external validation response comprising at least one attack or failure category validated by said coordinating device, said validated attack or failure category being the received attack or failure category if there is a match between the attack or failure category detected by the coordinating device and the received attack or failure category, and the attack or failure category detected by the coordinating device otherwise, respectively.

12. System for managing anomalies according to Claim 11, **characterized in that** said response further comprises a reward set to a positive value if the received attack or failure category corresponds to the attack or failure category detected by the coordinating device and to a negative value otherwise, respectively.

13. System for managing anomalies according to Claim 11 or Claim 12, **characterized in that** the response further comprises a type of measurement data to be added to said plurality of measurement data collected by the anomaly-detecting device.

14. System for managing anomalies according to any of Claims 11 to 13, **characterized in that** said network comprises at least one slice comprising a said coordinating device, said slice being configured to support a communication service for a given client and comprising at least two sub-slices managed by distinct administrative entities, each sub-slice comprising at least one target element and a said anomaly-detecting device configured to detect anomalies in said at least one target element of said sub-slice.

15. Computer program product comprising program code instructions for implementing a method according to any of Claims 1 to 8, when it is executed by a processor.
